# EUROPEAN PATENT APPLICATION

(11) **EP 4 355 012 A1**
(43) Date of publication of application: **17.04.2024**
(21) Application number: 22824024.8
(22) Date of filing: 26.05.2022
(51) Int. Cl.: H04W 76/12, H04W 48/16

(54) **COMMUNICATION METHOD, APPARATUS, AND SYSTEM**

(30) Priority: 18.06.2021 CN 202110676036
(71) Applicant: Huawei Technologies Co., Ltd., Shenzhen, Guangdong 518129 (CN)
(72) Inventor: LUO, Haiyan, Shenzhen, Guangdong 518129 (CN); ZHU, Yuanping, Shenzhen, Guangdong 518129 (CN); ZENG, Qinghai, Shenzhen, Guangdong 518129 (CN)
(74) Representative: Huawei European IPR
(86) International application number: PCT/CN2022/095168
(87) International publication number: WO 2022/262544

(57) **Abstract**

This application provides a communication method, apparatus, and system. The communication method includes: A first access network device (an indoor base station) obtains first information, and then sends the first information to a core network device through a control plane of a next generation (NG) interface or a general packet radio service tunnelling protocol for the user plane (GTP-U) tunnel between the first access network device and the core network device. The first information transmitted on the control plane of the NG interface or the GTP-U tunnel needs to pass through a route of a second access network device (an outdoor base station). According to this method, the indoor base station may perform NG interface-based communication with the core network device via the outdoor base station, to provide a better home network service.

## Description

### TECHNICAL FIELD

This application relates to the field of communication technologies, and in particular, to a communication method, apparatus, and system.

### BACKGROUND

A household device may access, via a residential gateway (residential gateway, RG), an outdoor network, for example, a cellular network that complies with the 3rd generation partnership project (3rd Generation Partnership Project, 3GPP) specification, to enjoy a service provided by the outdoor network.

However, with an increasing quantity of household smart devices and complex indoor deployment of household devices, a new home network architecture is urgently needed to implement a better home network service.

### SUMMARY

This application provides a communication method, apparatus, and system, to provide a better home network service.

According to a first aspect, a communication method is provided. The communication method includes: A first access network device obtains first information. The first access network device sends the first information to a core network device through a control plane of a next generation (next generation, NG) interface or a general packet radio service tunnelling protocol for the user plane (general packet radio service tunnelling protocol for the user plane, GTP-U) tunnel between the first access network device and the core network device. The first information transmitted on the control plane of the NG interface or the GTP-U tunnel passes through a route of a second access network device.

In the solution provided in the first aspect, the first access network device may perform uplink communication with the core network device via the second access network device through the NG interface. When the first access network device is an indoor base station, and the second access network device is an outdoor base station, the indoor base station may perform uplink communication with the core network device via the outdoor base station through the NG interface, to provide a better home network service.

In a possible design of the first aspect, the first access network device receives the first information from a terminal through a Uu interface. The first information includes at least one of information used for requesting registration, information used for requesting establishment of a protocol data unit (protocol data unit, PDU) session, and an internet protocol (internet protocol, IP) data packet.

In a possible design of the first aspect, the first access network device automatically generates the first information. The first information includes information used for requesting setup of the NG interface.

In a possible design of the first aspect, the first information transmitted on the control plane of the NG interface or the GTP-U tunnel has a corresponding IP header. The IP header includes a destination IP address and a source IP address. The destination IP address includes an IP address of the core network device, and the source IP address includes an IP address of the first access network device. In this design, the core network device can determine, based on the destination IP address and the source IP address in the IP header corresponding to the first information, that the first information is sent by the first access network device to the core network device.

In a possible design of the first aspect, during transmission of the first information on the GTP-U tunnel, the IP address of the first access network device includes an IP address used for a first PDU session of the terminal.

In a possible design of the first aspect, the first access network device receives the IP address of the first access network device and/or the IP address of the core network device from the second access network device, the core network device, or a network management device.

In a possible design of the first aspect, the first access network device sends request information to the second access network device, the core network device, or the network management device. The request information is used for requesting the IP address of the first access network device and/or the IP address of the core network device. In this design, the first access network device can obtain the IP address of the first access network device and/or the IP address of the core network device.

In a possible design of the first aspect, the first information transmitted on the control plane of the NG interface or the GTP-U tunnel further passes through a gateway. In this design, space deployment of different first access network devices can be more flexible. To be specific, different first access network devices can perform communication with the second access network device and the core network device via a same gateway. In addition, an egress of a home base station may be unified via a residential gateway.

In a possible design of the first aspect, the first access network device receives the IP address of the first access network device and/or the IP address of the core network device from the second access network device, the core network device, or the network management device via the gateway.

In a possible design of the first aspect, the gateway is located in the first access network device. In this design, a specific first access network device can have a gateway function, to serve another first access network device.

According to a second aspect, a communication method is provided. The communication method includes: A gateway obtains a first message. The first message carries first information transmitted on a control plane of an NG interface or a GTP-U tunnel between a first access network device and a core network device. The gateway generates a third message based on the first message. The gateway sends the third message to a second access network device through a radio interface between the gateway and the second access network device.

In the solution provided in the second aspect, the gateway may serve the control plane of the NG interface or the GTP-U tunnel between the first access network device and the core network device. In this way, space deployment of different first access network devices can be more flexible. To be specific, different first access network devices can perform communication with the second access network device and the core network device via a same gateway. In addition, an egress of a home base station may be unified via a residential gateway.

In the solution provided in the second aspect, the gateway adds a corresponding adaptation Adapt layer header to the first message. The Adapt layer header includes identification information of the first access network device. In this design, the gateway can generate the third message based on the first message, to enable the second access network device to determine the first access network device corresponding to the first information.

In a possible design of the second aspect, the gateway sends the third message to the second access network device through a default backhaul channel between the gateway and the second access network device. In this design, the gateway can quickly forward the third message.

According to a third aspect, a communication method is provided. The communication method includes: A core network device sends second information to a terminal or a first access network device through a control plane of an NG interface or a GTP-U tunnel between the core network device and the first access network device. The second information transmitted on the control plane of the NG interface or the GTP-U tunnel passes through a route of a second access network device.

In the solution provided in the third aspect, the core network device may perform downlink communication with the first access network device through the second access network device through the NG interface. When the first access network device is an indoor base station, and the second access network device is an outdoor base station, the core network device may perform downlink communication with the indoor base station via the outdoor base station through the NG interface, to provide a better home network service.

In the solution provided in the third aspect, the core network device sends the second information to the terminal. The second information includes at least one of information used for accepting registration, information used for requesting establishment of a protocol data unit PDU session resource, and an internet protocol IP data packet.

In a possible design of the third aspect, the core network device sends the second information to the first access network device. The second information includes information used for responding to an NG interface setup request.

In a possible design of the third aspect, the second information transmitted on the control plane of the NG interface or the GTP-U tunnel has a corresponding IP header. The IP header includes a destination IP address and a source IP address. The destination IP address includes an IP address of the core network device, and the source IP address includes an IP address of the first access network device.

In a possible design of the third aspect, when the second information is transmitted on the GTP-U tunnel, the IP address of the first access network device includes an IP address of a second PDU session of the terminal.

In a possible design of the third aspect, the second information transmitted on the GTP-U tunnel has a corresponding GTP-U header. The GTP-U header includes a flow identifier QFI corresponding to the second information. In this design, the first access network device can guarantee a QoS requirement corresponding to the second information based on the QFI corresponding to the second information.

In a possible design of the third aspect, the second information transmitted on the control plane of the NG interface or the GTP-U tunnel further passes through a gateway.

In a possible design of the third aspect, the gateway is located in the first access network device.

According to a fourth aspect, a communication method is provided. The communication method includes: A second access network device obtains a second message. The second message carries second information transmitted on a control plane of an NG interface or a GTP-U tunnel between a core network device and a first access network device. The second access network device generates a fourth message based on the second message. The second access network device sends the fourth message to the first access network device.

In the solution provided in the fourth aspect, the second access network device may serve the control plane of the NG interface or the GTP-U tunnel between the core network device and the first access network device, to provide a better home network service.

In a possible design of the fourth aspect, the second message has a corresponding internet protocol IP header. The IP header includes a destination IP address and a source IP address. The destination IP address includes an IP address of the core network device, and the source IP address includes an IP address of the first access network device.

In a possible design of the fourth aspect, when the second message carries the second information transmitted on the GTP-U tunnel between the core network device and the first access network device, the IP address of the first access network device includes an IP address of a second PDU session of a terminal.

In a possible design of the fourth aspect, the second access network device may add a corresponding adaptation Adapt layer header to the second message. The Adapt layer header includes identification information of the first access network device. In this design, a subsequent gateway can recognize the first access network device based on the identification information of the first access network device, and forward a message to the first access network device.

In a possible design of the fourth aspect, the second access network device may send the fourth message to the first access network device through a radio interface between the second access network device and a gateway.

In a possible design of the fourth aspect, the second access network device may determine the gateway corresponding to the IP address of the first access network device based on a correspondence between the IP address of the first access network device and the gateway, and the IP address of the first access network device. In this design, the second access network device can determine the first access network device, and forward the message to the first access network device.

In a possible design of the fourth aspect, the correspondence between the IP address of the first access network device and the gateway is from the core network device.

In a possible design of the fourth aspect, the correspondence between the IP address of the first access network device and the gateway is automatically generated by the second access network device.

According to a fifth aspect, this application provides a communication apparatus. The communication apparatus includes at least one processor and an interface. The interface is configured to input and/or output a signal. For example, the interface is configured to receive a signal from a communication apparatus other than the communication apparatus and communicate the signal to the processor, and/or the interface is configured to send the signal from the processor to a communication apparatus other than the communication apparatus. The processor is configured to enable the communication apparatus to perform the foregoing methods. For example, the processor implements the method in any method of the first aspect to the fourth aspect by using a logic circuit and/or by executing program instructions.

Optionally, the apparatus may be a chip or an integrated circuit in a node included in the first aspect to the fourth aspect.

Optionally, the communication apparatus may further include at least one memory. The memory stores the program instructions. The processor is coupled to the at least one memory, and is configured to execute the program instructions, to implement the foregoing method designs.

According to a sixth aspect, this application provides a communication apparatus. The apparatus has a component (component), a module (module), a unit (unit), or a means (means) that implements the method in any one of the first aspect to the fourth aspect and the designs thereof. The apparatus may be implemented by using hardware, software, firmware, or any combination thereof. For example, the apparatus may be implemented by executing corresponding software by the hardware. The hardware or the software includes one or more corresponding units (modules) that are configured to implement the foregoing method designs, for example, includes a transceiver unit and a processing unit.

According to a seventh aspect, this application provides a computer-readable storage medium. The computer-readable storage medium stores program instructions. When the program instructions are run by a processor, the method in any one of the first aspect to the fourth aspect and the designs thereof is implemented.

According to an eighth aspect, this application provides a computer program product. The computer program product includes program instructions. When the program instructions are executed by a processor, the method in any one of the first aspect to the fourth aspect and the designs thereof is implemented.

According to a ninth aspect, this application further provides a chip. The chip is configured to implement the method in any one of the first aspect to the fourth aspect and the designs thereof.

### BRIEF DESCRIPTION OF DRAWINGS

The following describes the solutions provided in this application in detail with reference to the accompanying drawings. Features or content identified by dashed lines in the accompanying drawings may be understood as optional operations or optional structures in embodiments of this application.
FIG. 1 is a schematic diagram of a communication system;
FIG. 2 is a schematic diagram of a control plane protocol stack of a communication system;
FIG. 3 is a schematic diagram of a user plane protocol stack of a communication system;
FIG. 4 is a schematic diagram of a control plane protocol stack of a communication system;
FIG. 5 is a schematic diagram of a user plane protocol stack of a communication system;
FIG. 6 is a schematic diagram of a control plane protocol stack of a communication system;
FIG. 7 is a schematic diagram of a user plane protocol stack of a communication system;
FIG. 8 is a schematic diagram of a communication method 100;
FIG. 9 is a schematic diagram of a communication method 200;
FIG. 10 is a schematic diagram of a communication method 300;
FIG. 11 is a schematic diagram of a communication method 400;
FIG. 12 is a schematic block diagram of a communication apparatus; and
FIG. 13 is a schematic block diagram of an apparatus.

### DESCRIPTION OF EMBODIMENTS

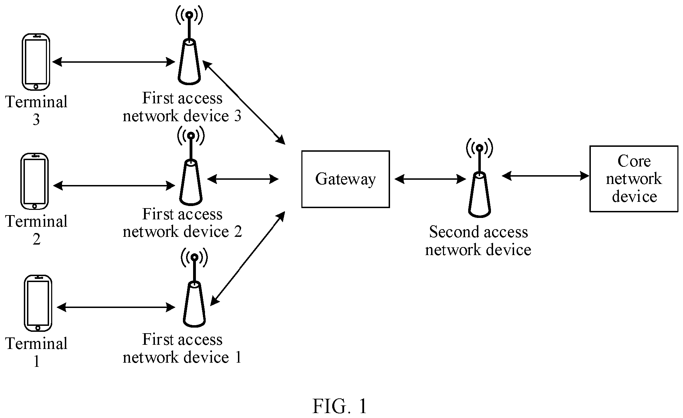

FIG. 1 is a schematic diagram of a communication system according to this application. The communication system includes a terminal, first access network devices 1 to 3, a gateway, a second access network device, and a core network device. The communication system may include more or fewer first access network devices. This is not limited in this application. In a home network scenario, the "first access network device 1", the "first access network device 2", the "first access network device 3", the "gateway", and the "second access network device" may be respectively a "home base station 1", a "home base station 2", a "home base station 3", a "residential gateway", and an "outdoor base station". Certainly, the devices in the communication system may also be applied to another scenario. For example, the "gateway" may be an "enterprise gateway", a "relay device", or a "routing device". The "first access network device 1", the "first access network device 2", and the "first access network device 3" may alternatively be an "enterprise base station 1", an "enterprise base station 2", and an "enterprise base station 3". Alternatively, the "second access network device" may be located indoors.

A terminal 1 to a terminal 3 may access the first access network device 1 to the first access network device 3 in a wireless (wireless) communication manner. The second access network device and the core network device may communicate with each other in a wired (wireline) manner. In a possible implementation, the first access network device 1 may include a function of the gateway. To be specific, the first access network device 1 and the gateway are a same entity, and the entity includes both a function of the first access network device 1 and the function of the gateway. In this case, the first access network device 1, the first access network device 2, and the first access network device 3 may communicate with each other in a wired manner. The first access network device 1 and the second access network device may communicate with each other in a wireless manner. In another possible implementation, the first access network device 1, the first access network device 2, the first access network device 3, and the gateway may be different entities. In this case, the first access network device 1, the first access network device 2, or the first access network device 3 and the gateway may communicate with each other in a wired manner, and there is a wired interface (for example, an X interface). The gateway and the second access network device may communicate with each other in a wireless manner, and there is a wireless interface (for example, an air interface or a Uu interface).

In this application, the terminal is also sometimes referred to as user equipment (user equipment, UE), a mobile station, a terminal device, or the like. The terminal may be widely applied to various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a set-top box, a tablet computer, a computer having a wireless transceiver function, a wearable device, a vehicle, an uncrewed aerial vehicle, a helicopter, an airplane, a ship, a robot, a robot arm, a smart home device, or the like. The terminal may include but is not limited to user equipment, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (for example, a smart watch, a smart band, or smart glasses), smart furniture or a home appliance, a vehicle device in V2X, customer premises equipment (customer premises equipment, CPE), and the like. A specific name and an implementation form of the terminal are not limited in this application.

In this application, the first access network device or the second access network device may include but is not limited to a premise radio access station (premise radio access station, PRAS), an indoor base station (indoor base station, IBS), a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB or home NodeB), a transmission point (transmission reception point or transmission point), a road side unit (road side unit, RSU) having a base station function, a baseband unit (baseband unit, BBU), a remote radio unit (Remote Radio Unit, RRU), an active antenna unit (active antenna unit, AAU), one antenna panel or a group of antenna panels, a node having a base station function in a subsequent evolved system, and the like. The first access network device or the second access network device may be an entity, for example, including a central unit (central unit, CU) function and a distributed unit (distributed unit, DU) function. Alternatively, the first access network device or the second access network device may include a CU entity and a DU entity.

In this application, the gateway may include but is not limited to a residential gateway (residential gateway, RG), an evolved residential gateway (evolved residential gateway, eRG), and a 5th generation residential gateway (5th generation residential gateway, 5RG), a network node having a relay function, and a network node having a routing function. When oriented to the second access network device, the gateway may serve as the terminal, that is, has a function and a protocol stack of the terminal.

In this application, the core network (core network, CN) device may include but is not limited to an access and mobility function (access & mobility function, AMF) entity, a user plane function (user plane function, UPF) entity, a mobility management entity (mobility management entity, MME), a serving gateway (serving gateway, S-GW), a public data network gateway (public data network gateway, P-GW), and the like.

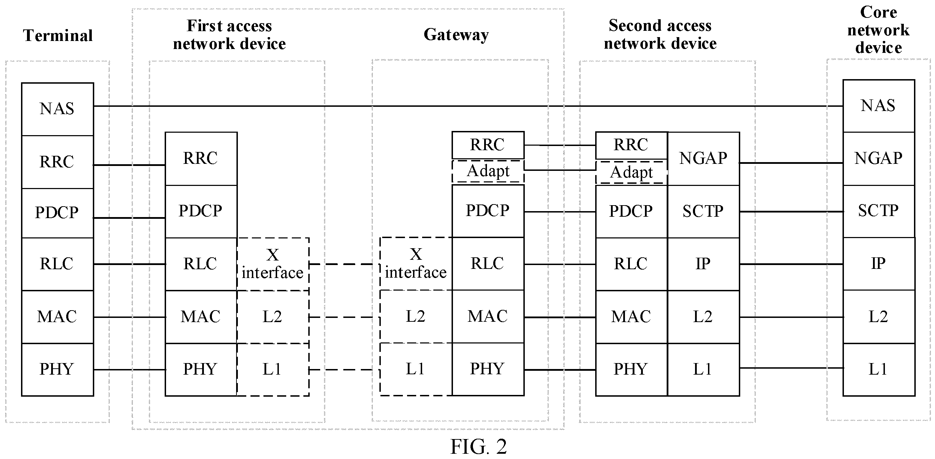

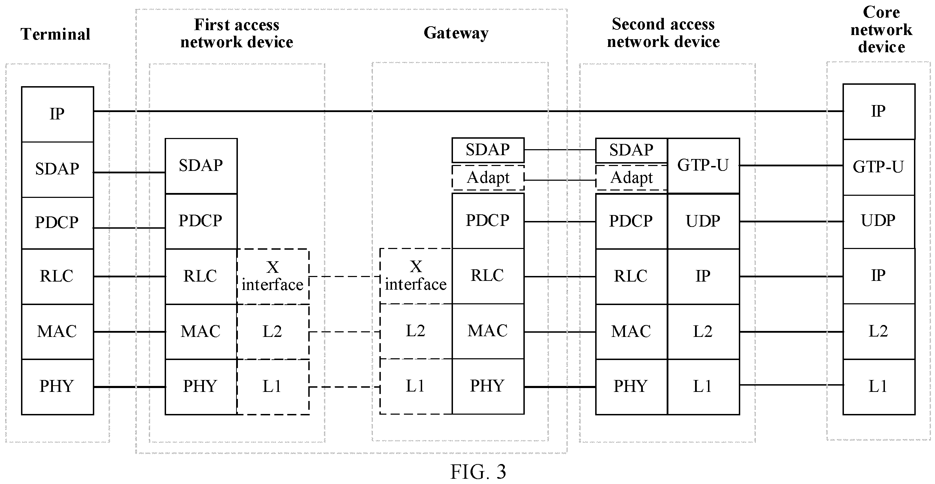

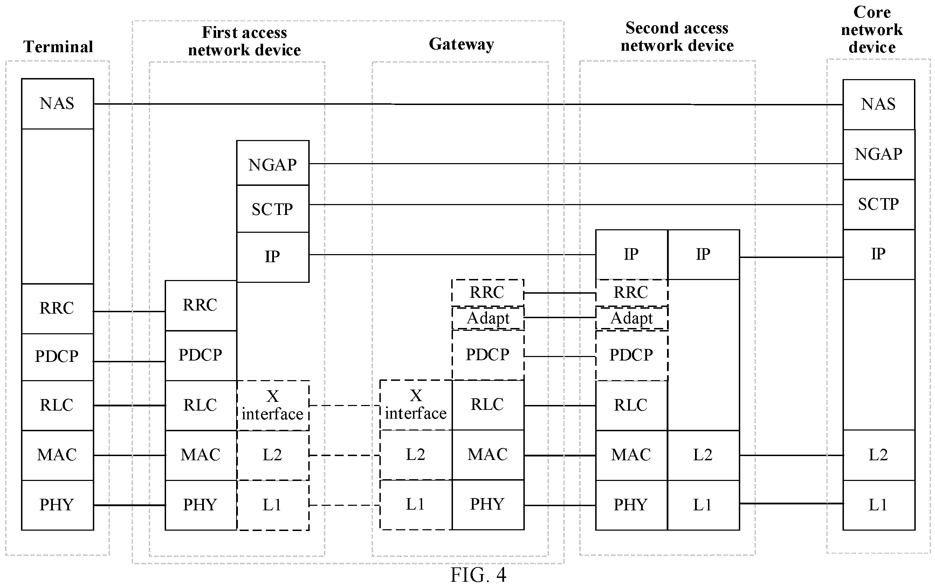

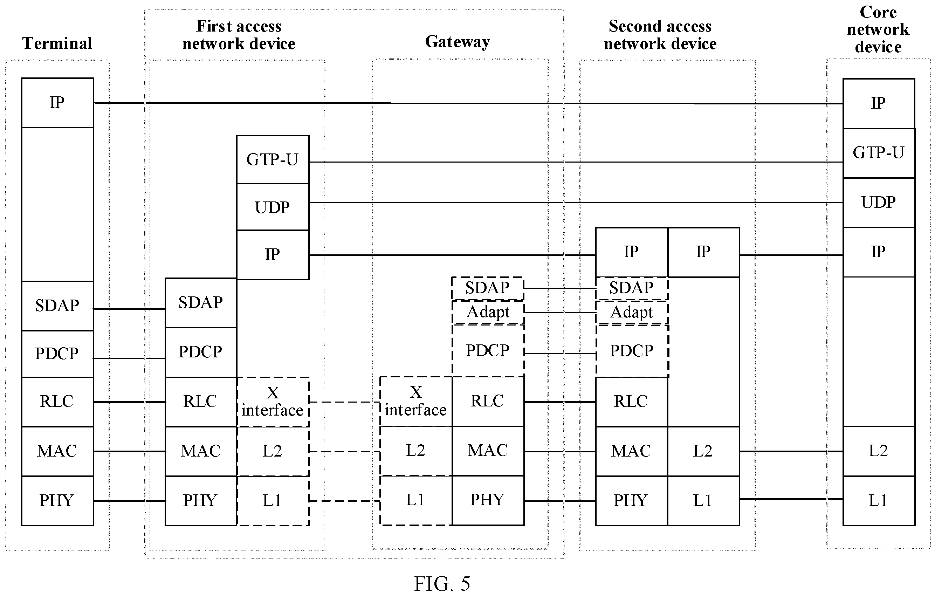

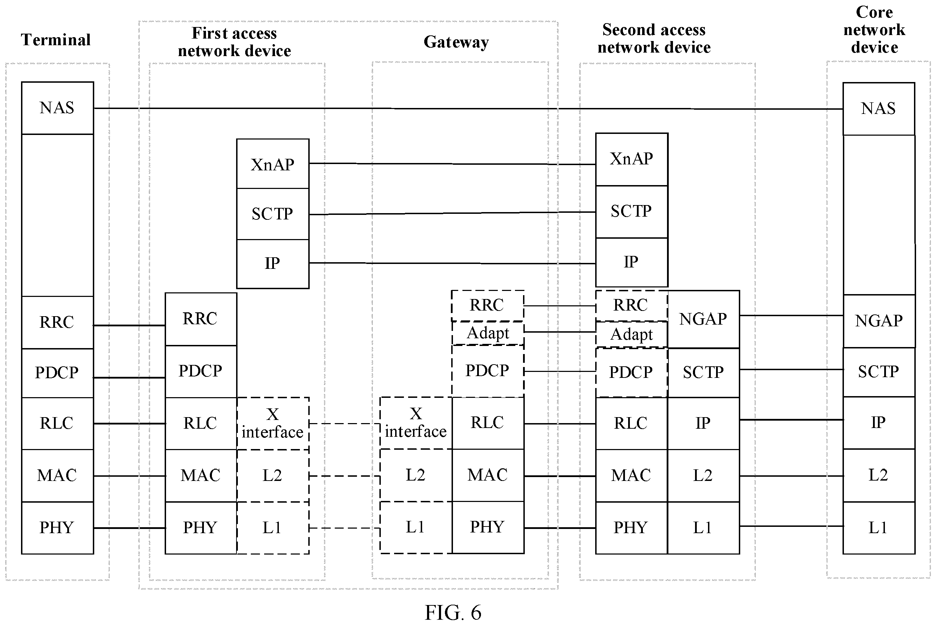

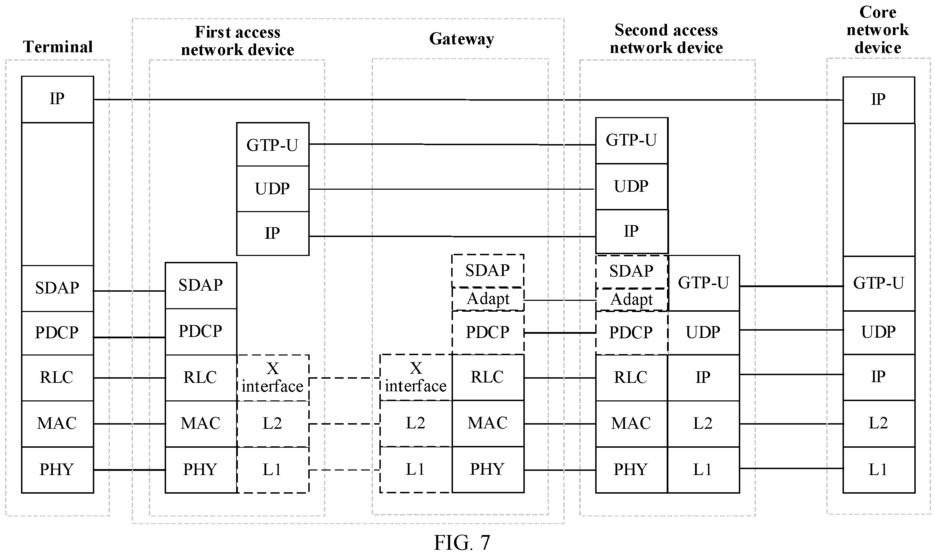

FIG. 2 is a schematic diagram of a control plane protocol stack of a communication system according to an embodiment of this application. FIG. 3 is a schematic diagram of a user plane protocol stack of a communication system according to an embodiment of this application. FIG. 4 is a schematic diagram of a control plane protocol stack of another communication system according to an embodiment of this application. FIG. 5 is a schematic diagram of a user plane protocol stack of another communication system according to an embodiment of this application. FIG. 6 is a schematic diagram of a control plane protocol stack of still another communication system according to an embodiment of this application. FIG. 7 is a schematic diagram of a user plane protocol stack of still another communication system according to an embodiment of this application. In the communication system in each of FIG. 2 to FIG. 7, an example in which a first access network device and a gateway are different entities is used. When the first access network device and the gateway are a same entity (that is, the first access network device includes a function of the gateway), a protocol stack of the first access network device and a protocol stack of the gateway in each of FIG. 2 to FIG. 7 may be combined. In other words, a peer protocol stack between the first access network device and the gateway may be omitted.

As shown in FIG. 2, peer protocol layers between a terminal and the first access network device include a radio resource control (radio resource control, RRC) layer, a packet data convergence protocol (packet data convergence protocol, PDCP) layer, a radio link control (radio link control, RLC) layer, a medium access control (medium access control, MAC) layer, and a physical (physical, PHY) layer. A peer protocol layer between the terminal and a core network device (for example, an AMF) includes a non-access stratum (non-access stratum, NAS). It is assumed that an interface between the first access network device and the gateway is an X interface, and peer X interface control plane protocol layers between the first access network device and the gateway may include an X interface application (X application protocol, XAP) layer, a layer 2 (layer 2, L2), and a layer 1 (layer 1, L1). An internet protocol (internet protocol, IP) layer and a stream control transmission protocol (stream control transmission protocol, SCTP) layer may be further included between L2 and the X interface application layer. L1 and L2 may refer to protocol stack layers in a wired transmission (for example, optical fiber transmission) network. For example, L1 may be the physical layer, and L2 may be a data link layer. Peer protocol layers between the gateway and a second access network device include an RRC layer, a PDCP layer, an RLC layer, a MAC layer, and a PHY layer. Peer protocol layers between the second access network device and the core network device (for example, the AMF) include a next generation application protocol (next generation application protocol, NGAP) layer, an SCTP layer, an IP layer, L2, and L1.

As shown in FIG. 3, peer protocol layers between a terminal and the first access network device include a service data adaptation protocol (service data adaptation protocol, SDAP) layer, a PDCP layer, an RLC layer, a MAC layer, and a PHY layer. A peer protocol layer between the terminal and a core network device (for example, a UPF) includes an IP layer. It is assumed that an interface between the first access network device and the gateway is an X interface, and peer X interface user plane protocol layers between the first access network device and the gateway may include a general packet radio service tunnelling protocol for the user plane (general packet radio service tunnelling protocol for the user plane, GTP-U) layer, a user datagram protocol (user datagram protocol, UDP) layer, an IP layer, L2, and L1. Peer protocol layers between the gateway and a second access network device include an SDAP layer, a PDCP layer, an RLC layer, a MAC layer, and a PHY layer, and optionally, further includes an Adapt layer. Peer protocol layers between the second access network device and the core network device (for example, the UPF) include a GTP-U layer, a UDP layer, an IP layer, L2, and L1.

As shown in FIG. 4, peer protocol layers between a terminal and the first access network device include an RRC layer, a PDCP layer, an RLC layer, a MAC layer, and a PHY layer. A peer protocol layer between the terminal and a core network device (for example, an AMF) includes a NAS. It is assumed that an interface between the first access network device and the gateway is an X interface, and peer X interface control plane protocol layers between the first access network device and the gateway includes an XAP, L2, and L1. An IP layer and an SCTP layer may be further included between L2 and an X interface application layer. Peer protocol layers between the gateway and a second access network device include an RLC layer, a MAC layer, and a PHY layer (in this case, internet protocol security (Internet protocol security, IPsec) may be used for security protection between the first access network device and the second access network device). Optionally, the peer protocol layers between the gateway and the second access network device further include an RRC layer and a PDCP layer (in this case, the IPsec may not be used for security protection between the first access network device and the second access network device; and an air interface security mechanism (for example, a PDCP layer security function) between the gateway and the second access network device is used for security protection on a data packet between the first access network device and the second access network device). Optionally, the peer protocol layers between the gateway and the second access network device further include an Adapt layer. Peer protocol layers between the second access network device and the core network device (for example, the AMF) include an IP layer, L2, and L1. Peer protocol layers between the first access network device and the core network device include an NGAP layer and an SCTP layer. A peer protocol layer between the first access network device and the second access network device includes an IP layer. Alternatively, it may be considered that the peer protocol layers between the first access network device and the core network device include an NGAP layer, an SCTP layer, and an IP layer.

As shown in FIG. 5, peer protocol layers between a terminal and the first access network device include an SDAP layer, a PDCP layer, an RLC layer, a MAC layer, and a PHY layer. A peer protocol layer between the terminal and a core network device (for example, a UPF) includes an IP layer. It is assumed that an interface between the first access network device and the gateway is an X interface, and peer X interface user plane protocol layers between the first access network device and the gateway may include a GTP-U layer, a UDP layer, an IP layer, L2, and L1. Peer protocol layers between the gateway and a second access network device may include an RLC layer, a MAC layer, and a PHY layer (in this case, IPsec may be used for security protection between the first access network device and the second access network device). Optionally, the peer protocol layers between the gateway and the second access network device further include an SDAP layer (where for example, when the SDAP layer is configured, values of sdap-HeaderUL and sdap-HeaderDL are both set to "present") and the PDCP layer (in this case, the IPsec may not be used for security protection between the first access network device and the second access network device; and an air interface security mechanism (for example, a PDCP layer security function) between the gateway and the second access network device is used for security protection on a data packet between the first access network device and the second access network device). Optionally, the peer protocol layers between the gateway and the second access network device further include an Adapt layer. Peer protocol layers between the second access network device and the core network device (for example, the UPF) include an IP layer, L2, and L1. Peer protocol layers between the first access network device and the core network device include a GTP-U layer and a UDP layer. A peer protocol layer between the first access network device and the second access network device includes an IP layer. Alternatively, it may be considered that the peer protocol layers between the first access network device and the core network device include a GTP-U layer, a UDP layer, and an IP layer.

As shown in FIG. 6, peer protocol layers between a terminal and the first access network device include an RRC layer, a PDCP layer, an RLC layer, a MAC layer, and a PHY layer. A peer protocol layer between the terminal and a core network device (for example, an AMF) includes a NAS. It is assumed that an interface between the first access network device and the gateway is an X interface, and peer X interface control plane protocol layers between the first access network device and the gateway include a control plane XAP, L2, and L1. An IP layer and an SCTP layer may be further included between L2 and an X interface application layer. Peer protocol layers between the gateway and a second access network device include an RLC layer, a MAC layer, and a PHY layer (in this case, IPsec may be used for security protection between the first access network device and the second access network device). Optionally, the peer protocol layers between the gateway and the second access network device further include an RRC layer and a PDCP layer (in this case, the IPsec may not be used for security protection between the first access network device and the second access network device; and an air interface security mechanism (for example, a PDCP layer security function) between the gateway and the second access network device is used for security protection on a data packet between the first access network device and the second access network device). Optionally, the peer protocol layers between the gateway and the second access network device further include an Adapt layer. Peer protocol layers between the second access network device and the core network device (for example, the AMF) include an NGAP layer, an SCTP layer, an IP layer, L2, and L1. Peer protocol layers between the first access network device and the second access network device include an Xn interface application protocol (Xn application protocol, XnAP) layer, an SCTP layer, and an IP layer.

As shown in FIG. 7, peer protocol layers between a terminal and the first access network device include an SDAP layer, a PDCP layer, an RLC layer, a MAC layer, and a PHY layer. A peer protocol layer between the terminal and a core network device (for example, a UPF) includes an IP layer. It is assumed that an interface between the first access network device and the gateway is an X interface, and peer X interface user plane protocol layers between the first access network device and the gateway may include a GTP-U layer, a UDP layer, an IP layer, L2, and L1. Peer protocol layers between the gateway and a second access network device include an RLC layer, a MAC layer, and a PHY layer (in this case, IPsec may be used for security protection between the first access network device and the second access network device). Optionally, the peer protocol layers between the gateway and the second access network device further include an SDAP layer (where for example, when the SDAP layer is configured, values of sdap-HeaderUL and sdap-HeaderDL are both set to "present") and the PDCP layer (in this case, the IPsec may not be used for security protection between the first access network device and the second access network device; and an air interface security mechanism (for example, a PDCP layer security function) between the gateway and the second access network device is used for security protection on a data packet between the first access network device and the second access network device). Optionally, the peer protocol layers between the gateway and the second access network device further include an Adapt layer. Peer protocol layers between the second access network device and the core network device (for example, the UPF) include a GTP-U layer, a UDP layer, an IP layer, L2, and L1. Peer protocol layers between the first access network device and the second access network device include a GTP-U layer, a UDP layer, and an IP layer.

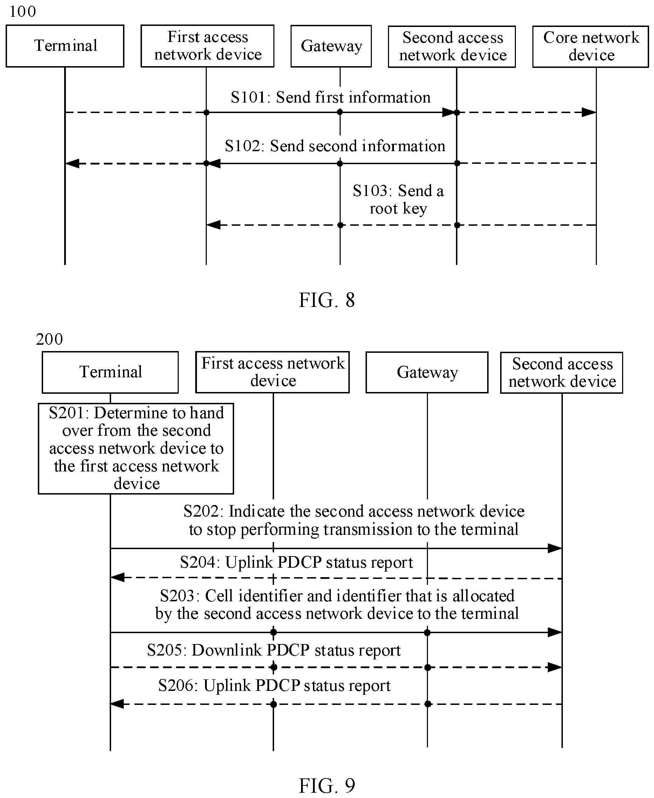

The following further describes the solutions provided in this application based on the foregoing communication architecture and the foregoing communication scenario with reference to a schematic flowchart of a communication method provided in FIG. 8. FIG. 8 provides a schematic flowchart of a communication method 100.

S 101: Send first information.

When S101 is that a terminal sends the first information to a core network device, the first information may be control plane information, for example, NAS information, between the terminal and the core network device (for example, an AMF). For example, the first information includes information used for requesting registration or information used for requesting establishment of a protocol data unit session. The first information may be carried in a registration request (registration request) message or a protocol data unit session establishment request (protocol data unit session establishment request, PDU session establishment request) message. Optionally, the first information may alternatively be user plane information, for example, an uplink IP data packet, between the terminal and the core network device (for example, a UPF).

Before the terminal sends the first information to the core network device, the terminal may initially access a first access network device, and establish an RRC connection to the first access network device. The terminal sends the first information to the core network device via the first access network device, a gateway, and a second access network device.

When S101 is that a first access network device sends the first information to a core network device, the first information may be control plane information between the first access network device and the core network device. For example, the first information includes information used for requesting setup of a next generation interface. The first information may be carried in a next generation interface setup request (next generation setup request, NG setup request) message.

When S 101 is that a first access network device sends the first information to a second access network device, the first information may be control plane information between the first access network device and the second access network device. For example, the first information may include information used for requesting setup of an Xn interface. The first information may be carried in an Xn interface setup request (Xn setup request) message.

The following further describes the communication method 100 based on the foregoing communication architectures and the foregoing communication scenarios shown in FIG. 2 to FIG. 7.

### (1) In a case of the control plane protocol stack shown in FIG. 2:

The terminal includes the first information that is to be sent to the core network device in an RRC message. In this case, the first information may be carried in a NAS container (NAS container), or may be carried in the RRC message as a NAS container. The terminal sends the RRC message to the first access network device through an interface (for example, an air interface or a Uu interface) between the terminal and the first access network device.

The first access network device obtains the first information. The first access network device sends the first information to the gateway through an interface (for example, an X interface or an internal interface) between the first access network device and the gateway. Optionally, the first access network device sends a first identifier (UE ID #1) of the terminal and the first information to the gateway. For example, when the interface between the first access network device and the gateway is the X interface, the UE ID #1 may be a UE XAP ID. For example, there is a correspondence between the UE ID #1 and a cell radio network temporary identifier (cell radio network temporary identifier, C-RNTI) that is allocated by the first access network device to the terminal. The UE ID #1 may be the C-RNTI, or may be a newly configured identifier (which may be automatically configured by the first access network device or uniformly configured by a network management device (for example, an operation, administration and maintenance (operation, administration and maintenance, OAM) network element)) that has a correspondence with the C-RNTI. In an initial case (where for example, the first information is a first piece of NAS information sent by the terminal to the core network device), after determining the UE ID #1, the first access network device may store the correspondence between the UE ID #1 and the C-RNTI. In a non-initial case, the first access network device may obtain the UE ID #1 based on the C-RNTI and the stored correspondence between the UE ID #1 and the C-RNTI.

The gateway obtains the first information. The gateway sends, to the second access network device through an interface (for example, an air interface or a Uu interface) between the gateway and the second access network device, the RRC message that carries the first information. For example, the gateway further includes a second identifier (UE ID #2) of the terminal in the RRC message. The UE ID #2 may be carried in an Adapt layer header. Optionally, the gateway further obtains the UE ID #1. There is a correspondence between the UE ID #2 and the UE ID #1. The UE ID #2 may be the UE ID #1, or may be a newly configured identifier (which may be automatically configured by the gateway or uniformly configured by the network management device (for example, the OAM)) that has a correspondence with the UE ID #1. In the initial case (where for example, the first information is the first piece of NAS information sent by the terminal to the core network device), after determining the UE ID #2, the gateway may store the correspondence between the UE ID #1 and the UE ID #2. In the non-initial case, the gateway may obtain the UE ID #2 based on the UE ID #1 and the correspondence between the UE ID #1 and the UE ID #2.

The second access network device obtains the first information. The second access network device sends, to the core network device through an interface (for example, an NG interface) between the second access network device and the core network device, an NG interface message that carries the first information and a third identifier (UE ID #3) of the terminal. For example, the NG interface message may be an initial user equipment message (initial UE message). The UE ID #3 may be a UE NGAP ID on a radio access network (radio access network, RAN) side, for example, a RAN UE NGAP ID. For example, the second access network device further obtains the UE ID #2. There is a correspondence between the UE ID #3 and the UE ID #2. The UE ID #3 may be the UE ID #2, or may be a newly configured identifier (which may be automatically configured by the second access network device or uniformly configured by the network management device (for example, the OAM)) that has a correspondence with the UE ID #2. In the initial case (where for example, the first information is the first piece of NAS information sent by the terminal to the core network device), after determining the UE ID #3, the second access network device may store the correspondence between the UE ID #2 and the UE ID #3. In the non-initial case, the second access network device may obtain the UE ID #3 based on the UE ID #2 and the correspondence between the UE ID #2 and the UE ID #3.

### (2) In a case of the user plane protocol stack shown in FIG. 3:

The terminal sends, to the first access network device through an interface between the terminal and the first access network device, the first information that is to be sent to the core network device. In this case, the first information may be an IP data packet.

The first access network device obtains the first information. The first access network device sends the first information and a protocol data unit session (protocol data unit session, PDU session) identifier corresponding to the first information to the gateway through an interface between the first access network device and the gateway. Optionally, the first access network device may send at least one of a first identifier (UE ID #1) of the terminal and a QoS flow identifier (QoS flow identifier, QFI) corresponding to the first information to the gateway.

The gateway obtains the first information and the PDU session identifier corresponding to the first information. Optionally, the gateway further obtains the at least one of the UE ID #1 and the QFI corresponding to the first information. The gateway sends the first information and the PDU session identifier corresponding to the first information to the second access network device through an interface between the gateway and the second access network device. Optionally, the gateway further sends the QFI corresponding to the first information. The PDU session identifier corresponding to the first information may be carried in an Adapt layer header, and the QFI may be carried in an SDAP layer header. In a possible implementation, the gateway may further send a second identifier (UE ID #2) of the terminal to the second access network device. The UE ID #2 may be carried in the Adapt layer header. Optionally, the gateway may obtain the UE ID #2 based on the UE ID #1 and a correspondence between the UE ID #1 and the UE ID #2. In another possible implementation, the gateway sends the first information to the second access network device through a DRB identified by a DRB ID #1. Optionally, the gateway further obtains the UE ID #1. The gateway may obtain, based on the UE ID #1 and a correspondence between the identifiers UE ID #1 and DRB ID #1 (or the DRB identified by the DRB ID #1), the DRB identified by the DRB ID #1.

The second access network device obtains the first information and the PDU session identifier corresponding to the first information. Optionally, the second access network device further obtains the QFI corresponding to the first information. In a possible implementation, the second access network device further obtains the UE ID #2. The second access network device may determine the terminal corresponding to the first information based on the obtained UE ID #2. In another possible implementation, the second access network device obtains the first information through the DRB identified by the DRB ID #1. The gateway may determine the terminal corresponding to the first information based on the DRB identified by the DRB ID #1 and a correspondence between the terminal and the identifier DRB ID #1 (or the DRB identified by the DRB ID #1).

The second access network device determines, based on a correspondence among the terminal, a PDU session, and a GTP-U tunnel, to communicate the first information through a first GTP-U tunnel between the second access network device and the core network device. The second access network device adds a corresponding GTP-U header to the first information. Optionally, the GTP-U header further includes the QFI corresponding to the first information. Optionally, the GTP-U header further includes a tunnel endpoint identifier (tunnel endpoint identifier, TEID) corresponding to the terminal device and the PDU session. The correspondence among the terminal, the PDU session, and the GTP-U tunnel may be shown in Table 1 below.

**Table 1**

| Terminal | PDU session | GTP-U tunnel |
|---|---|---|
| UE #1 | PDU session ID #1 | GTP-U tunnel #1 |
| UE #1 | PDU session ID #2 | GTP-U tunnel #2 |
| UE #2 | PDU session ID #1 | GTP-U tunnel #3 |
| ... | ... | ... |

As shown in Table 1, a specific PDU session of a specific terminal uniquely corresponds to a specific GTP-U tunnel. In this case, when determining the terminal and the PDU session that correspond to the first information, the second access network device may determine the GTP-U tunnel corresponding to the first information based on the correspondence shown in Table 1. There is a one-to-many correspondence between the terminal and the PDU session, and there is a one-to-one correspondence between the PDU session and the GTP-U tunnel. The GTP-U tunnel may be identified by an IP address and the TEID. It should be noted that Table 1 shows only a possible correspondence among the terminal, the PDU session, and the GTP-U tunnel. There may be a one-to-one correspondence between the terminal and the PDU session. There may be a one-to-many correspondence or a many-to-one correspondence between the PDU session and the GTP-U tunnel. This is not limited in this embodiment of this application.

### (3) In a case of the control plane protocol stack shown in FIG. 4:

When S101 is that the terminal sends the first information to the core network device (for example, an AMF), the terminal includes the first information that is to be sent to the core network device in an RRC message. In this case, the first information may be carried in a NAS container (NAS container), or may be carried in the RRC message as a NAS container. The terminal sends the RRC message to the first access network device through an interface between the terminal and the first access network device. When S101 is that the first access network device sends the first information to the core network device, the first access network device generates the first information.

The first access network device obtains the first information. The first access network device may include the first information in an NG interface message. For example, the first access network device may add a corresponding IP header to the first information. The IP header includes a destination IP address and a source IP address. The destination IP address is an IP address of the core network device. The source IP address includes an IP address of the first access network device. For example, the gateway may request the IP address of the first access network device from the second access network device, the core network device, or a network management device (for example, an OAM). After allocating the IP address to the first access network device, the second access network device, the core network device, or the network management device (for example, the OAM) sends the IP address of the first access network device to the gateway. The gateway sends the IP address of the first access network device to the first access network device. In addition, the gateway may further request the IP address of the core network device from the core network device or the network management device (for example, the OAM). The core network device or the network management device (for example, the OAM) sends the IP address of the core network device to the gateway. The gateway sends the IP address of the core network device to the first access network device. According to the foregoing method, the first access network device can obtain the IP address of the first access network device and the IP address of the core network device.

The first access network device sends the NG interface message to the core network device through an interface (for example, an NG interface) between the first access network device and the core network device. Communication on a control plane of the NG interface between the first access network device and the core network device may be performed via the gateway and the second access network device.

First, the gateway receives a first message. The first message carries first information transmitted on the control plane of the NG interface. The gateway generates a third message based on the first message. For example, the gateway may add a corresponding Adapt layer header to the first message, to generate the third message. The Adapt layer header includes identification information of the first access network device. The gateway may send the third message to the second access network device through a default backhaul channel (backhaul channel, BH CH) between the gateway and the second access network device. The default backhaul channel is a channel that is used for communicating and carrying the third message between the gateway and the second access network device.

Then, the second access network device receives the third message. The second access network device obtains the IP address of the core network device included in the IP header corresponding to the first information, to determine the core network device. The second access network device sends, to the core network device, a message that carries the first information. After obtaining, through the NG interface, the NG interface message that carries the first information, the core network device (for example, the AMF) obtains the first information.

### (4) In a case of the user plane protocol stack shown in FIG. 5:

The terminal sends, to the first access network device through an interface between the terminal and the first access network device, the first information that is to be sent the first to the core network device (for example, a UPF). In this case, the first information may be an IP data packet.

The first access network device receives the first information from the terminal. The first access network device may determine a first GTP-U tunnel (where the first GTP-U tunnel is located between the first access network device and the core network device) corresponding to the first information based on a correspondence among the terminal, a PDU session, and a GTP-U tunnel. The first access network device may include the first information in a GTP-U packet. For example, the first access network device may add a corresponding IP header to the first information. The IP header includes a destination IP address and a source IP address. The destination IP address includes an IP address of the core network device. The source IP address includes an IP address of the first access network device. The IP address of the first access network device may include an IP address used for a first PDU session of the terminal. The IP address used for the first PDU session of the terminal may be agreed on by the first access network device and the core network device. Optionally, the first access network device may add a corresponding GTP-U header to the first information. The GTP-U header corresponding to the first information includes a QFI corresponding to the first information. Optionally, the GTP-U header further includes a TEID corresponding to the terminal device and the PDU session.

The first access network device sends the GTP-U packet to the core network device (for example, the UPF) through the first GTP-U tunnel. Communication on the first GTP-U tunnel may be performed via the gateway and the second access network device.

First, the gateway receives the first message. The first message carries the first information transmitted on the first GTP-U tunnel. The gateway generates a third message based on the first message. For example, the gateway may add a corresponding Adapt layer header to the first message, to generate the third message. The Adapt layer header includes identification information of the first access network device. The gateway may send the third message to the second access network device through a default backhaul channel (backhaul channel, BH CH) between the gateway and the second access network device. The default backhaul channel is a channel that is used for communicating and carrying the third message between the gateway and the second access network device.

Then, the second access network device receives the third message. The second access network device obtains the IP address of the core network device included in the IP header corresponding to the first information, to determine the core network device. The second access network device sends, to the core network device, a message that carries the first information. After obtaining, through the first GTP-U tunnel, the GTP-U packet that carries the first information, the core network device (for example, the UPF) obtains the first information.

### (5) In a case of the control plane protocol stack shown in FIG. 6:

When S101 is that the terminal sends the first information to the core network device (for example, an AMF), the terminal includes the first information that is to be sent to the core network device in an RRC message. In this case, the first information may be carried in a NAS container (NAS container), or may be carried in the RRC message as a NAS container. The terminal sends the RRC message to the first access network device through an interface between the terminal and the first access network device. When S 101 is that the first access network device sends the first information to the second access network device, the first access network device generates the first information.

The first access network device obtains the first information. The first access network device may include the first information in an Xn interface message. For example, the first access network device may add a corresponding IP header to the first information. The IP header includes a destination IP address and a source IP address. The destination IP address includes an IP address of the second access network device. The source IP address includes an IP address of the first access network device. For example, the gateway may request the IP address of the first access network device from the second access network device, the core network device, or a network management device (for example, an OAM). After allocating the IP address to the first access network device, the second access network device, the core network device, or the network management device (for example, the OAM) sends the IP address of the first access network device to the gateway. The gateway sends the IP address of the first access network device to the first access network device. In addition, the gateway may further request the IP address of the second access network device from the second access network device, the core network device, or the network management device (for example, the OAM). The second access network device, the core network device, or the network management device (for example, the OAM) sends the IP address of the second access network device to the gateway. The gateway sends the IP address of the second access network device to the first access network device. According to the foregoing method, the first access network device can obtain the IP address of the first access network device and the IP address of the second access network device.

The first access network device sends the Xn interface message to the second access network device through an interface (for example, an Xn interface) between the first access network device and the second access network device. Communication on a control plane of the Xn interface between the first access network device and the second access network device may be performed via the gateway.

First, the gateway receives a first message. The first message carries the first information transmitted on the control plane of the Xn interface. The gateway generates a third message based on the first message. For example, the gateway may add a corresponding Adapt layer header to the first message, to generate the third message. The Adapt layer header includes identification information of the first access network device. The gateway may send the third message to the second access network device through a default backhaul channel (backhaul channel, BH CH) between the gateway and the second access network device. The default backhaul channel is a channel that is used for communicating and carrying the third message between the gateway and the second access network device.

Then, the second access network device receives the third message. The second access network device obtains the IP address of the second access network device included in the IP header corresponding to the first information, to determine that a message that carries the first information is to be sent to the second access network device. When S 101 is that the terminal sends the first information to the core network device, the second access network device sends, to the core network device through an interface (for example, an NG interface) between the second access network device and the core network device, the message that carries the first information.

### (6) In a case of the user plane protocol stack shown in FIG. 7:

The terminal sends, to the first access network device through an interface between the terminal and the first access network device, the first information that is to be sent the first to the core network device (for example, a UPF). In this case, the first information may be an IP data packet.

The first access network device receives the first information from the terminal. The first access network device may determine a first GTP-U tunnel (where the first GTP-U tunnel is located between the first access network device and the core network device) corresponding to the first information based on a correspondence among the terminal, a PDU session, and a GTP-U tunnel. The first access network device may include the first information in a GTP-U packet. For example, the first access network device may add a corresponding IP header to the first information. The IP header includes a destination IP address and a source IP address. The destination IP address includes an IP address of the second access network device. The source IP address includes an IP address of the first access network device. The IP address of the first access network device may include an IP address used for a first PDU session of the terminal. Optionally, the first access network device may add a corresponding GTP-U header to the first information. The GTP-U header corresponding to the first information includes a QFI corresponding to the first information. Optionally, the GTP-U header further includes a TEID corresponding to the terminal device and the PDU session.

The first access network device sends the GTP-U packet to the second access network device through the first GTP-U tunnel. Communication on the first GTP-U tunnel may be performed via the gateway.

First, the gateway receives a first message. The first message carries the first information transmitted on the first GTP-U tunnel. The gateway generates a third message based on the first message. For example, the gateway may add a corresponding Adapt layer header to the first message, to generate the third message. The Adapt layer header includes identification information of the first access network device. The gateway may send the third message to the second access network device through a default backhaul channel (backhaul channel, BH CH) between the gateway and the second access network device. The default backhaul channel is a channel that is used for communicating and carrying the third message between the gateway and the second access network device.

Then, the second access network device receives the third message. The second access network device obtains the IP address of the second access network device included in the IP header corresponding to the first information, to determine that a message that carries the first information is to be sent to the second access network device. When S 101 is that the terminal sends the first information to the core network device, the second access network device sends, to the core network device through the GTP-U tunnel between the second access network device and the core network device, the message that carries the first information.

S102: Send second information.

When S102 is that the core network device sends the second information to the terminal, the second information may be control plane information, for example, NAS information, between the core network device (for example, the AMF) and the terminal. For example, the second information includes information used for accepting registration or information used for requesting establishment of a protocol data unit session resource. The second information may be carried in a registration accept (registration accept) message or a protocol data unit session resource establishment request (protocol data unit session resource establishment request) message. Optionally, the second information may alternatively be user plane information, for example, a downlink IP data packet, between the terminal and the core network device (for example, the UPF). The core network device sends the second information to the terminal device via the second access network device, the gateway, and the first access network device.

When S102 is that the core network device sends the second information to the first access network device, the second information may be control plane information between the core network device and the first access network device. For example, the second information includes information used for responding to an NG interface setup request. The second information may be carried in a next generation interface setup response (next generation setup response, NG setup response).

When S102 is that the second access network device sends the second information to the first access network device, the second information may be control plane information between the second access network device and the first access network device. For example, the second information includes information used for responding to an Xn interface setup request. The second information may be carried in an Xn interface setup response (Xn setup response) message.

The second information may include at least one of the following: a PDU identifier, a QFI, and a quality of service (quality of service, QoS) parameter corresponding to the QFI. The QoS parameter may include at least one of the following information: a 5th generation communication system quality of service identifier (5G QoS identifier, 5QI), a guaranteed flow bit rate (guaranteed flow bit rate, GFBR), a maximum flow bit rate (maximum flow bit rate, MFBR), a minimum required communication range (minimum required communication range, range), an allocation and retention priority (allocation and retention priority, ARP), and the like. Based on the second information, a communication system can completely or partially achieve a QoS guarantee for subsequent data transmission.

### (1) In the case of the control plane protocol stack shown in FIG. 2:

The core network device (for example, the AMF) includes, in the NG interface message, the second information that is to be sent to the terminal or the first access network device, and the third identifier (UE ID #3) of the terminal. The core network device sends the NG interface message to the second access network device through the interface (for example, the NG interface) between the core network device and the second access network device.

The second access network device obtains the second information and the UE ID #3. The second access network device sends, to the gateway through the interface between the second access network device and the gateway, an RRC message that carries the second information. For example, the RRC message may further include a data radio bearer (data radio bearer, DRB) identifier configured by the second access network device for the terminal. Optionally, a DRB identifier configured by the second access network device for the gateway may be the same as or may be different from the DRB identifier configured for the terminal. DRB identifiers configured by the second access network device for different terminals may be the same or different. A DRB of the gateway includes a DRB configured by the second access network device for the gateway and DRBs configured for different terminals. For example, the second access network device further includes the second identifier (UE ID #2) of the terminal in the RRC message. Optionally, the UE ID #2 may be further carried in an Adapt layer header. Optionally, the second access network device obtains the UE ID #2 based on the UE ID #3 and the correspondence between the UE ID #3 and the UE ID #2. Further, the second access network device may determine the gateway based on the UE ID #2 or the UE ID #3 and a correspondence between the gateway and the UE ID #2 or a correspondence between the gateway and the UE ID #3 (where for example, because the second access network device obtains the second information and the UE ID #2 from the gateway, there is the correspondence between the gateway and the UE ID #2, and because the UE ID #3 is determined based on the UE ID #2, there is also the correspondence between the gateway and the UE ID #3).

The gateway obtains the second information. The gateway sends, to the first access network device through the interface between the gateway and the first access network device, a message that carries the second information. Optionally, the gateway further includes the first identifier (UE ID #1) of the terminal in the message. For example, the gateway further obtains the UE ID #2. The gateway may obtain the UE ID #1 based on the UE ID #2 and the correspondence between the UE ID #2 and the UE ID #1. Further, the gateway may determine the first access network device based on the UE ID #1 or the UE ID #2 and a correspondence between the first access network device and the UE ID #1 or a correspondence between the first access network device and the UE ID #2 (where for example, because the gateway obtains the second information and the UE ID #1 from the first access network device, there is the correspondence between the gateway and the UE ID #1, and because the UE ID #2 is determined based on the UE ID #1, there is also the correspondence between the gateway and the UE ID #2), and the first access network device can be determined based on the UE ID #1 or the UE ID #2.

The first access network device obtains the second information. When S 102 is that the core network device sends the second information to the first access network device, the first access network device may generate third information based on the second information, and send the third information to the terminal. When S102 is that the core network device sends the second information to the terminal, the first access network device may send the second information to the terminal through the interface between the first access network device and the terminal.

Optionally, the first access network device further obtains the UE ID #1. The first access network device obtains the C-RNTI based on the UE ID #1 and the correspondence between the UE ID #1 and the C-RNTI. The first access network device sends a message, for example, an RRC reconfiguration (RRC Reconfiguration) message, that carries the second information or the third information to the terminal through the interface between the first access network device and the terminal by using the C-RNTI.

### (2) In the case of the user plane protocol stack shown in FIG. 3:

The core network device (for example, the UPF) communicates, through the first GTP-U tunnel between the core network device and the second access network device, the second information that is to be sent to the terminal. In this case, the second information may be an IP data packet. A GTP-U header of the second information transmitted on the first GTP-U tunnel includes a QFI corresponding to the second information. Optionally, the GTP-U header further includes a TEID corresponding to the terminal device and the PDU session.

The second access network device obtains the second information through the first GTP-U tunnel between the second access network device and the core network device. The second access network device obtains the QFI corresponding to the second information from the GTP-U header of the second information. The second access network device may determine a terminal and a PDU session that correspond to the second information based on the first GTP-U tunnel and the correspondence among the terminal, the PDU session, and the GTP-U tunnel. In a possible implementation, the second access network device obtains the UE ID #2 based on the terminal corresponding to the second information. Further, the second access network device may determine the gateway based on the UE ID #2 and the correspondence between the gateway and the UE ID #2. The second access network device sends the PDU session identifier corresponding to the second information, the QFI corresponding to the second information, the UE ID #2, and the second information to the gateway through the interface between the second access network device and the gateway. The PDU session identifier corresponding to the second information and the UE ID #2 may be carried in an Adapt layer header, and the QFI may be carried in an SDAP layer header. In another possible implementation, the second access network device obtains a DRB corresponding to the terminal based on the terminal corresponding to the second information. The DRB is identified by the DRB ID #1. Further, the second access network device may determine the gateway based on the terminal corresponding to the second information and a correspondence between the gateway and the terminal. The second access network device sends the PDU session identifier corresponding to the second information, the QFI corresponding to the second information, and the second information to the gateway through the interface between the second access network device and the gateway and by using the DRB corresponding to the terminal. The PDU session identifier corresponding to the second information may be carried in an Adapt layer header, and the QFI may be included in an SDAP layer header.

The gateway obtains the PDU session identifier corresponding to the second information, the QFI corresponding to the second information, and the second information. The gateway sends the PDU session identifier corresponding to the second information, the QFI corresponding to the second information, and the second information to the first access network device through the interface between the gateway and the first access network device. Optionally, the gateway further sends the UE ID #1 to the first access network device. In a possible implementation, the gateway further obtains the UE ID #2. The gateway may obtain the UE ID #1 based on the UE ID #2 and the correspondence between the UE ID #2 and the UE ID #1. Further, the gateway may determine the first access network device based on the UE ID #1 or the UE ID #2 and a correspondence between the first access network device and the UE ID #1 or a correspondence between the first access network device and the UE ID #2. In another possible implementation, the gateway obtains the PDU session identifier corresponding to the second information, the QFI corresponding to the second information, and the second information through the DRB identified by the DRB ID #1. The gateway may obtain the UE ID #1 based on the identifier DRB ID #1 (or the DRB identified by the DRB ID #1) and a correspondence between the identifiers UE ID #1 and DRB ID #1 (or the DRB identified by the DRB ID #1). Further, the gateway may determine the first access network device based on the UE ID #1 and the correspondence between the first access network device and the UE ID #1.

The first access network device obtains the QFI corresponding to the second information and the second information. Optionally, the first access network device may further determine a terminal identifier (the UE ID#1) and the PDU session identifier, for example, obtain the terminal identifier and the PDU session identifier from an X interface that carries the second information. The first access network device sends the second information to the terminal through the interface between the first access network device and the terminal and by using a DRB corresponding to the QFI For example, the first access network device obtains a C-RNTI based on the obtained UE ID #1 and a correspondence between the UE ID #1 and the C-RNTI that is allocated to the terminal. The first access network device sends the second information to the terminal through the interface between the first access network device and the terminal and by using the C-RNTI and the DRB corresponding to the QFI

### (3) In the case of the control plane protocol stack shown in FIG. 4:

The core network device (for example, the AMF) includes, in the NG interface message, the second information that is to be sent to the terminal or the first access network device. The core network device sends the NG interface message to the first access network device through the interface (for example, the control plane of the NG interface) between the core network device and the first access network device. The second information transmitted on the control plane of the NG interface may be carried in an NGAP container (NGAP container), or may be carried in the NG interface message as a NAS container. The second information transmitted on the control plane of the NG interface has a corresponding IP header. The IP header includes a destination IP address and a source IP address. The destination IP address includes the IP address of the first access network device. The source IP address includes the IP address of the core network device.

Communication on the control plane of the NG interface between the core network device and the first access network device may be performed via the second access network device and the gateway.

First, the second access network device receives a second message. The second message carries the second information transmitted on the control plane of the NG interface. The second access network device obtains the IP address of the first access network device included in the IP header corresponding to the second information. The second access network device determines a gateway corresponding to the IP address of the first access network device based on a correspondence between the IP address of the first access network device and the gateway. The second access network device generates a fourth message based on the second message. For example, the second access network device adds a corresponding Adapt layer header to the second message, to generate the fourth message. The Adapt layer header includes an identifier of the first access network device (where the second access network device may determine the identifier of the first access network device based on the IP address of the first access network device and a correspondence between the IP address of the first access network device and the identifier of the first access network device). The second access network device sends the fourth message to the gateway. In a possible implementation, the correspondence between the IP address of the first access network device and the gateway may be preconfigured by the core network device for the second access network device. For example, the core network device may send configuration information to the second access network device. The configuration information includes correspondences between IP addresses of different first access network devices and different gateway identifiers. In another possible implementation, when the second access network device receives a message that is sent by the gateway and that carries the first information, the second access network device may obtain the IP address of the first access network device included in the IP header corresponding to the first information. Therefore, the second access network device may automatically determine the correspondence between the IP address of the first access network device and the gateway.

The gateway receives the fourth message. The fourth message carries the second information transmitted on the control plane of the NG interface. In a possible implementation, the gateway obtains the Adapt layer header corresponding to the second information. The gateway determines the first access network device based on the identifier of the first access network device included in the Adapt layer header. In another possible implementation, the gateway obtains the IP address of the first access network device included in the IP header corresponding to the second information, to determine the first access network device. The gateway sends, to the first access network device, a message that carries the second information.

Finally, the first access network device obtains the second information through the NG interface between the first access network device and the core network device. The first access network device obtains the IP address of the first access network device included in the IP header corresponding to the second information, to determine that the message that carries the second information is to be sent to the first access network device. When S102 is that the core network device sends the second information to the terminal, the first access network device further needs to send, to the terminal, the message that carries the second information.

### (4) In the case of the user plane protocol stack shown in FIG. 5:

The core network device (for example, the UPF) communicates, through the first GTP-U tunnel between the core network device and the first access network device, the second information that is to be sent to the terminal. In this case, the second information may be an IP data packet. The core network device may include the second information in the GTP-U packet. For example, the second information transmitted on the first GTP-U tunnel has a corresponding IP header and a corresponding GTP-U header. The IP header includes a destination IP address and a source IP address. The destination IP address includes the IP address of the first access network device. The source IP address includes the IP address of the core network device. The IP address of the first access network device may include an IP address of a second PDU session of the terminal. The GTP-U header corresponding to the second information includes a QFI corresponding to the second information. Optionally, the GTP-U header further includes a TEID corresponding to the terminal device and the PDU session. The core network device sends the GTP-U packet to the first access network device through the first GTP-U tunnel. Communication on the first GTP-U tunnel may be performed via the second access network device and the gateway.

First, the second access network device receives a second message. The second message carries the second information transmitted on the first GTP-U tunnel. The second access network device obtains the IP address of the second PDU session of the terminal included in the IP header corresponding to the second information. The second access network device determines a gateway corresponding to the IP address of the second PDU session of the terminal based on a correspondence (where the correspondence may be preconfigured by the core network device for the second access network device; for example, the core network device may send configuration information to the second access network device, where the configuration information includes correspondences between IP addresses of different PDU sessions of different terminals and gateway identifiers) between the IP address of the second PDU session of the terminal and the gateway. The second access network device generates a fourth message based on the second message. For example, the second access network device adds a corresponding Adapt layer header to the second information, to generate the fourth message. The Adapt layer header includes an identifier of the first access network device (where the second access network device may determine the identifier of the first access network device based on the IP address of the first access network device and a correspondence between the IP address of the first access network device and the identifier of the first access network device). The second access network device sends the fourth message to the gateway.

The gateway receives the fourth message. The fourth message carries the second information transmitted on the first GTP-U tunnel. For example, the gateway obtains the Adapt layer header corresponding to the second information. The gateway determines the first access network device based on the identifier of the first access network device included in the Adapt layer header. The gateway sends, to the first access network device, a message that carries the second information.

Finally, the first access network device obtains the second information through the first GTP-U tunnel. The first access network device obtains the IP address of the first access network device included in the IP header corresponding to the second information, to determine that the message that carries the second information is to be sent to the first access network device. When S102 is that the core network device sends the second information to the terminal, the first access network device further needs to send, to the terminal, the message that carries the second information. The first access network device determines a terminal corresponding to the second information based on the correspondence among the terminal, the PDU session, and the GTP-U tunnel. Further, the first access network device obtains the QFI that corresponds to the second information and that is included in the GTP-U header corresponding to the second information. The first access network device determines, based on a correspondence between the QFI and a DRB, to send, through a DRB corresponding to the QFI, the message that carries the second information to the terminal.

### (5) In the case of the control plane protocol stack shown in FIG. 6:

When S 102 is that the core network device (for example, the AMF) sends the second information to the terminal, the core network device includes, in an NG interface message, the second information that is to be sent to the terminal. The core network device sends the NG interface message to the second access network device through the interface between the core network device and the second access network device. When S 102 is that the second access network device sends the second information to the first access network device, the second access network device generates the second information.

The second access network device obtains a second message. The second message carries the second information. The second access network device generates a fourth message based on the second message. For example, the second access network device adds a corresponding IP header to the second message, to generate the fourth message. The IP header includes a destination IP address and a source IP address. The destination IP address includes the IP address of the first access network device. The source IP address includes the IP address of the second access network device. For example, the second access network device may further add a corresponding Adapt layer header to the second message, to generate the fourth message. The Adapt layer header includes an identifier of the first access network device (where the second access network device may determine the identifier of the first access network device based on the IP address of the first access network device and a correspondence between the IP address of the first access network device and the identifier of the first access network device).

The second access network device sends the fourth message to the first access network device through the interface (for example, the Xn interface) between the second access network device and the first access network device. Communication on the control plane of the Xn interface between the first access network device and the second access network device may be performed via the gateway.

First, the gateway receives a fifth message. The fifth message carries the second information transmitted on the control plane of the Xn interface. In a possible implementation, the gateway obtains the Adapt layer header corresponding to the second information. The gateway determines the first access network device based on the identifier of the first access network device included in the Adapt layer header. In another possible implementation, the gateway obtains the IP address of the first access network device included in the IP header corresponding to the second information, to determine the first access network device. The gateway sends, to the second access network device through the interface between the gateway and the second access network device, a message that carries the second information.

Then, the first access network device receives the second information transmitted on the control plane of the Xn interface. The first access network device obtains the IP address of the first access network device included in the IP header corresponding to the second information, to determine that the message that carries the second information is to be sent to the first access network device. When S102 is that the core network device sends the second information to the terminal, the first access network device further needs to send, to the terminal, the message that carries the second information.

### (6) In the case of the user plane protocol stack shown in FIG. 7:

When S102 is that the core network device (for example, the UPF) sends the second information to the terminal, the core network device sends, to the second access network device through the GTP-U tunnel between the core network device and the second access network device, the second information that is to be sent to the terminal. When S102 is that the second access network device sends the second information to the first access network device, the second access network device generates the second information.

The second access network device obtains the second information. The second access network device may include the second information in a GTP-U packet. For example, the second access network device adds a corresponding IP header to the second information. The IP header includes a destination IP address and a source IP address. The destination IP address includes the IP address of the first access network device. The source IP address includes the IP address of the second access network device. The IP address of the first access network device may include an IP address of a second PDU session of the terminal. The second access network device adds a corresponding GTP-U header to the second information. The GTP-U header includes a QFI corresponding to the second information. Optionally, the GTP-U header further includes a TEID corresponding to the terminal device and the PDU session. Optionally, the second access network device adds a corresponding Adapt layer header to the second information. The Adapt layer header includes an identifier of the first access network device (where the second access network device may determine the identifier of the first access network device based on the IP address of the first access network device and a correspondence between the IP address of the first access network device and the identifier of the first access network device).

The second access network device sends the GTP-U packet to the first access network device through the first GTP-U tunnel between the second access network device and the first access network device. Communication on the first GTP-U tunnel may be performed via the gateway.

First, the gateway receives a second message. The second message carries the second information transmitted on the first GTP-U tunnel. In a possible implementation, the gateway obtains the Adapt layer header corresponding to the second information. The gateway determines the first access network device based on the identifier of the first access network device included in the Adapt layer header. In another possible implementation, the gateway obtains the IP address of the first access network device included in the IP header corresponding to the second information, to determine the first access network device. The gateway sends, to the second access network device through the interface between the gateway and the second access network device, a message that carries the second information.

Then, the first access network device obtains the second information transmitted on the first GTP-U tunnel. The first access network device obtains the IP address of the first access network device included in the IP header corresponding to the second information, to determine that the message that carries the second information is to be sent to the first access network device. When S102 is that the core network device sends the second information to the terminal, the first access network device further needs to send, to the terminal, the message that carries the second information. The first access network device determines a terminal corresponding to the second information based on the correspondence among the terminal, the PDU session, and the GTP-U tunnel. Further, the first access network device obtains the QFI that corresponds to the second information and that is included in the GTP-U header corresponding to the second information. The first access network device determines, based on a correspondence between the QFI and a DRB, to send, through a DRB corresponding to the QFI, the message that carries the second information to the terminal.

In addition, in the gateway or the second access network device in the communication architecture shown in each of FIG. 2 to FIG. 7, a correspondence between an SDAP layer and a PDCP layer that correspond to a specific terminal may be shown in Table 2 below.

**Table 2**

| PDU session | SDAP layer | PDCP layer |
|---|---|---|
| PDU session ID #1 | SDAP layer #1 | PDCP layer #1 |
| | | PDCP layer #2 |
| | | ... |
| PDU session ID #2 | SDAP layer #2 | PDCP layer #1 |
| | | PDCP layer #3 |
| | | ... |

As shown in Table 2, usually, different DRBs of different PDU sessions of different UEs do not share a PDCP entity on a gateway side or a second access network device side. However, considering that a quantity of DRB identifiers in the gateway or the second access network device is limited, different PDU sessions of different UEs may share a same PDCP layer (for example, the PDCP layer #1 in Table 2) in a same gateway or a same second access network device. In this case, the terminal identifier (for example, the UE ID #2) and the PDU session identifier corresponding to the first information or the second information are carried in an Adapt layer header, so that the gateway can deliver first information or second information from an SDAP layer to a correct PDCP layer. There is a one-to-one correspondence between the PDU session and the SDAP layer, and there is a one-to-many correspondence between the SDAP layer and the PDCP layer. It should be noted that Table 2 shows only a possible correspondence among the PDU session, the SDAP layer, and the PDCP layer. There may be a one-to-many correspondence or a many-to-one correspondence between the PDU session and the SDAP layer. There may be a one-to-one correspondence or a many-to-one correspondence (for example, when a quantity of DRBs is limited) between the SDAP layer and the PDCP layer. This is not limited in this embodiment of this application. For example, if different PDU sessions do not share the same PDCP layer, and the gateway or the second access network device maintains a correspondence among the DRB, the terminal, and the PDU session that corresponds to the first information or the second information, the gateway and the second access network device may not need an adaptation layer. The correspondence among the DRB, the terminal, and the PDU session may be shown in Table 3 below.

**Table 3**

| DRB | Terminal | PDU session |
|---|---|---|
| DRB ID #1 | UE #1 | PDU session ID #1 |
| DRB ID #2 | UE #1 | PDU session ID #2 |
| DRB ID #3 | UE #2 | PDU session ID #1 |
| ... | ... | ... |

As shown in Table 3, a specific DRB uniquely corresponds to a specific PDU session of a specific terminal. In this case, when determining a DRB corresponding to the first information or the second information, the gateway or the second access network device may determine, based on the correspondence shown in Table 3, a terminal and a PDU session that correspond to a data packet. It should be noted that Table 3 shows only a possible correspondence among the DRB, the terminal, and the PDU session. There may be a one-to-one correspondence between the DRB and the terminal. There may be a one-to-many correspondence or a one-to-one correspondence between the terminal and the PDU session. This is not limited in this embodiment of this application.

S 103: The core network device sends a root key to the first access network device.

The root key may be used for security protection on the air interface (the Uu interface) between the terminal and the first access network device. The root key used for the Uu interface between the terminal and the first access network device for communication may be referred to as K_{gNB}. The terminal and the first access network device may derive, by using the root key, a control plane encryption key or a control plane integrity protection key and a user plane encryption key or a user plane integrity protection key that are needed for Uu interface transmission. For example, the terminal and the first access network device may use the control plane encryption key or the control plane integrity protection key for performing encryption or integrity protection on an RRC message (where the RRC message is carried on a signaling radio bearer (signaling radio bearer, SRB) for transmission) transmitted on the Uu interface or use the user plane encryption key or the user plane integrity protection key for performing encryption or integrity protection on user plane data (where the user plane data is carried on a data radio bearer (data radio bearer, DRB) for transmission).

### (1) In the case of the control plane protocol stack shown in FIG. 2:

The core network device (for example, the AMF) includes, in an NG interface message, the third identifier (UE ID #3) of the terminal and the root key that is to be sent to the first access network device and that is used for transmission between the terminal and the first access network device. The core network device sends the NG interface message to the second access network device through the interface (for example, the NG interface) between the core network device and the second access network device.

The second access network device obtains the root key and the UE ID #3. The second access network device obtains the UE ID #2 based on the UE ID #3 and the correspondence between the UE ID #2 and the UE ID #3. The second access network device determines the gateway based on the UE ID #2 and the correspondence between the gateway and the UE ID #2. The second access network device sends, to the gateway through the interface (the air interface or the Uu interface) between the gateway and the second access network device, an RRC message that carries the root key and the second identifier (UE ID #2) of the terminal.

The gateway obtains the root key and the UE ID #2. The gateway determines the first access network device based on the UE ID #2 and the correspondence between the first access network device and the UE ID #2. The gateway sends, to the first access network device through the interface (the air interface or the Uu interface) between the gateway and the first access network device, a message that carries the root key. Optionally, the gateway obtains the UE ID #1 based on the UE ID #2 and the correspondence between the UE ID #1 and the UE ID #2. The gateway sends, to the first access network device through the interface (the air interface or the Uu interface) between the gateway and the first access network device, a message that carries the root key and the first identifier (UE ID #1) of the terminal.

The first access network device obtains the root key used for transmission between the terminal and the first access network device. Therefore, the first access network device may generate the control plane encryption key, the control plane integrity protection key, the user plane encryption key, and the user plane integrity protection key for the terminal based on the root key.

### (2) In the case of the control plane protocol stack shown in FIG. 4:

The core network device (for example, the AMF) includes, in an NG interface message, a fourth identifier (UE ID #4) of the terminal and the root key that is to be sent to the first access network device. The core network device sends the NG interface message to the first access network device through the interface (for example, the NG interface) between the core network device and the first access network device. The root key transmitted on the control plane of the NG interface may be included in an NGAP container (NGAP container), or may be carried in the NG interface message as an NGAP container. The root key transmitted on the control plane of the NG interface has a corresponding IP header. The IP header includes a destination IP address and a source IP address. The destination IP address includes the IP address of the first access network device. The source IP address includes the IP address of the core network device.

Communication on the control plane of the NG interface between the core network device and the first access network device may be performed via the second access network device and the gateway.

First, the second access network device receives a second message. The second message carries the root key transmitted on the control plane of the NG interface and the UE ID #4. The second access network device obtains the IP address of the first access network device included in the IP header corresponding to the root key. The second access network device determines the gateway corresponding to the IP address of the first access network device based on the correspondence between the IP address of the first access network device and the gateway. The second access network device generates a fourth message based on the second message. For example, the second access network device adds a corresponding Adapt layer header to the second message, to generate the fourth message. The Adapt layer header includes the identifier of the first access network device (where the second access network device may determine the identifier of the first access network device based on the IP address of the first access network device and the correspondence between the IP address of the first access network device and the identifier of the first access network device). The second access network device sends the fourth message to the gateway.

The gateway receives the fourth message. The fourth message carries the root key transmitted on the control plane of the NG interface and the UE ID #4. In a possible implementation, the gateway obtains an Adapt layer header corresponding to the root key. The gateway determines the first access network device based on the identifier of the first access network device included in the Adapt layer header. In another possible implementation, the gateway obtains the IP address of the first access network device included in the IP header corresponding to the root key, to determine the first access network device. The gateway sends, to the first access network device, a message that carries the root key.

Finally, the first access network device obtains the root key and the fourth identifier (UE ID #4) of the terminal through the NG interface between the first access network device and the core network device. The first access network device may determine, based on the UE ID #4, a C-RNTI previously allocated to the terminal identified by the UE ID #4. The second access network device obtains the IP address of the first access network device included in the IP header corresponding to the root key, to determine that the message that carries the root key is to be sent to the second access network device. Therefore, the first access network device may generate the control plane encryption key, the control plane integrity protection key, the user plane encryption key, and the user plane integrity protection key for the terminal based on the root key.

### (3) In the case of the control plane protocol stack shown in FIG. 6:

When S 102 is that the core network device (for example, the AMF) sends the root key to the terminal, the core network device includes, in an NG interface message, a fifth identifier (UE ID #5) of the terminal and the root key that is to be sent to the terminal. The core network device sends the NG interface message to the second access network device through the interface between the core network device and the second access network device.

The second access network device receives a second message. The second message carries the root key and the UE ID #5. The second access network device generates a fourth message based on the second message. For example, the second access network device adds a corresponding IP header to the second message, to generate the fourth message. The IP header includes a destination IP address and a source IP address. The destination IP address includes the IP address of the first access network device. The source IP address includes the IP address of the second access network device. For example, the second access network device may further add a corresponding Adapt layer header to the second message, to generate the fourth message. The Adapt layer header includes the identifier of the first access network device (where the second access network device may determine the identifier of the first access network device based on the IP address of the first access network device and the correspondence between the IP address of the first access network device and the identifier of the first access network device).

The second access network device sends the fourth message to the first access network device through the interface (for example, the Xn interface) between the second access network device and the first access network device. Communication on the control plane of the Xn interface between the first access network device and the second access network device may be performed via the gateway.

First, the gateway receives a fifth message. The fifth message carries the root key transmitted on the control plane of the Xn interface. In a possible implementation, the gateway obtains an Adapt layer header corresponding to the root key. The gateway determines the first access network device based on the identifier of the first access network device included in the Adapt layer header. In another possible implementation, the gateway obtains the IP address of the first access network device included in the IP header corresponding to the root key, to determine the first access network device. The gateway sends, to the second access network device through the interface between the gateway and the second access network device, a message that carries the root key.

Then, the first access network device receives the root key transmitted on the control plane of the Xn interface and the fifth identifier (UE ID #5) of the terminal. The first access network device may determine, based on the UE ID #5, a C-RNTI previously allocated to the terminal identified by the UE ID #5. The first access network device obtains the IP address of the first access network device included in the IP header corresponding to the root key, to determine that the message that carries the root key is to be sent to the first access network device. Therefore, the first access network device may generate the control plane encryption key, the control plane integrity protection key, the user plane encryption key, and the user plane integrity protection key for the terminal based on the root key.

S103 is an optional operation. For example, when an end-to-end encryption manner is used between the core network device and the terminal, the core network device does not need to send the root key to the first access network device. Optionally, the NAS information in S101 includes indication information indicating that the terminal accesses the first access network device. The core network device may start the end-to-end encryption manner between the core network device (for example, the UPF) and the terminal based on the indication information.

The first information or the second information in this application may be transparently transmitted in the first access network device, the gateway, or the second access network device, or may be parsed by the first access network device, the gateway, or the second access network device. For example, that the first access network device obtains the first information may mean that the first access network device receives a specific message that includes the first information, or mean that the first access network device obtains the first information by parsing a specific message that includes the first information. A specific meaning may be determined based on whether a protocol layer for parsing the first information exists in the protocol stack. For example, when the first access network device has the protocol layer that may be used to obtain the first information through parsing, that the first access network device obtains the first information means that the first access network device obtains the first information by parsing the specific message that includes the first information. When the first access network device does not have the protocol layer that may obtain the first information through parsing, that the first access network device obtains the first information means that the first access network device receives the specific message that includes the first information.

In this application, adding a corresponding Adapt layer header, a corresponding IP header, or a corresponding GTP-U header to the first information/message or the second information/message may refer to encapsulating the Adapt layer header, the IP header, or the GTP-U header outside the first information/message or the second information/message. That the first information/message or the second information/message has the corresponding Adapt layer header, the corresponding IP header, or the corresponding GTP-U header may mean that the corresponding Adapt layer header, the corresponding IP header, or the corresponding GTP-U header is encapsulated outside the first information/message or the second information/message. In this application, various messages that carry the first information or the second information may refer to control plane signaling, or may refer to user plane data packets.

The following describes in detail mobility solutions of the terminal between the first access network device and the second access network device in the foregoing communication architectures and the foregoing communication scenarios with reference to FIG. 9 to FIG. 11.

FIG. 9 provides a schematic flowchart of a communication method 200. The communication method 200 is applicable to the communication system shown in FIG. 2 or FIG. 3.

S201: A terminal determines from a second access network device to a first access network device.

After the terminal accesses the second access network device, the second access network device sends conditional handover (conditional handover, CHO) configuration information to the terminal device. The CHO configuration information includes a handover trigger condition configured by the second access network device for the terminal and information about one or more access network devices corresponding to the handover trigger condition. After receiving the conditional handover configuration information, the terminal determines, based on the configuration information, whether each access network device meets the handover trigger condition, and uses an access network device that meets the handover trigger condition as a target access network device, to hand over to a target cell or the target access network device. The handover trigger condition may include that a signal strength of the second access network device is lower than a first preset threshold, and a signal strength of the first access network device is higher than a second preset threshold. Alternatively, the handover trigger condition may include that a signal strength of the first access network device is higher than a second preset threshold.

S202: The terminal sends indication information to the second access network device, where the indication information indicates the second access network device to stop performing transmission to the terminal.

After determining from the second access network device to the first access network device, the terminal may send the indication information to the second access network device. The indication information indicates the second access network device to stop performing transmission to the terminal. The indication information may be carried in an end-to-end RRC message between the terminal device and the second access network device or in a MAC control element (control element, CE) message. The indication information may serve as the first information in the method 100 for transmission in the communication system.

S203: The terminal sends a cell identifier and a terminal identifier to the second access network device.

After the terminal accesses the first access network device, the first access network device allocates a new C-RNTI to the terminal. The terminal may send the cell identifier and the terminal identifier to the second access network device via the first access network device and a gateway. The cell identifier and the terminal identifier may be carried in an uplink RRC message for transmission. The cell identifier and the terminal identifier may serve as the first information in the method 100 for transmission in the communication system.

The cell identifier may include at least one of the following: a physical cell identifier (physical cell identifier, PCI), a cell global identifier (cell global identifier, CGI), and a cell identifier (cell identifier). The cell identifier may include a base station identifier (for example, a gNB ID) and a cell local identifier (cell local identifier, cell local ID). The CGI, namely, the cell global identifier, includes a public land mobile network identifier (public land mobile network identifier, PLMN ID), the base station identifier (for example, the gNB ID), and the cell local ID. The terminal identifier includes a C-RNTI allocated by the second access network device to the terminal.

Optionally, the method 200 may further include operation S204, so that after performing operation S202, the terminal obtains a PDCP status report of uplink transmission in a direction from the terminal to the second access network device.

S204: The second access network device sends an uplink PDCP status report to the terminal.

The second access network device may send the uplink PDCP status report to the terminal through an interface (an air interface or a Uu interface) between the second access network device and the terminal.

Optionally, the method 200 may further include operation S205.

S205: The terminal sends a downlink PDCP status report to the second access network device.

The downlink PDCP status report may serve as the first information in the method 100 for transmission in the communication system.

Optionally, the method 200 may further include operation S206.

S206: The second access network device sends the uplink PDCP status report to the terminal.

The uplink PDCP status report may serve as the second information in the method 100 for transmission in the communication system.

The second access network device may perform either of the foregoing operations S204 and S206, so that the terminal obtains the PDCP status report of the uplink transmission in the direction from the terminal to the second access network device. The second access network device may choose to perform the foregoing operation S204 or S206.

S203 and S205 may be combined. In other words, the cell identifier, the terminal identifier, and the downlink PDCP status report may be carried in a same message. The message is sent by the terminal to the second access network device.

According to this embodiment of this application, the second access network device may forward, to the terminal via the gateway and the first access network device based on the downlink PDCP status report from the terminal, a downlink data packet that is previously unsuccessfully transmitted to the terminal. Alternatively, the terminal may forward, to the second access network device via the first access network device and the gateway, an uplink data packet that is previously unsuccessfully transmitted to the second access network device.

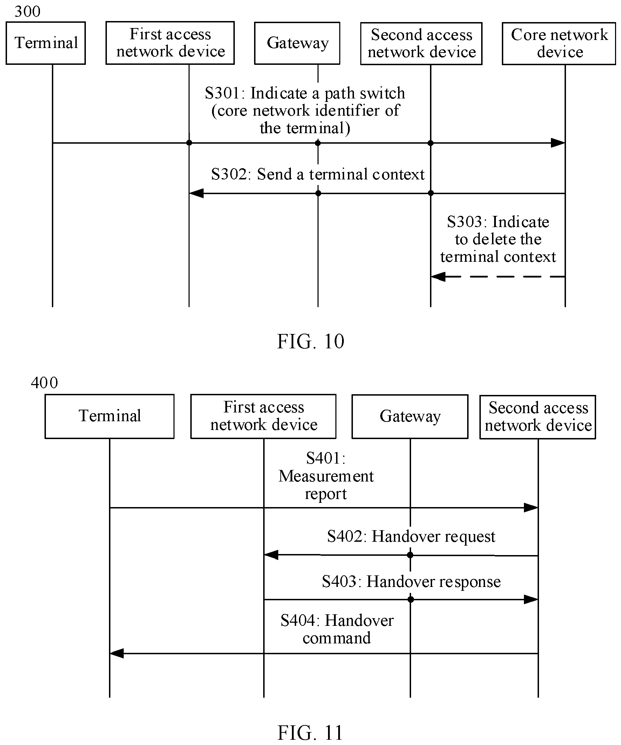

FIG. 10 provides a schematic flowchart of a communication method 300. The communication method 300 is applicable to the communication system shown in FIG. 4 or FIG. 5.

S301: A terminal sends fourth information to a core network device.

After being handed over from a second access network device to a first access network device, the terminal device sends the fourth information to the core network device via the first access network device, a gateway, and the second access network device. The fourth information may indicate a path switch (path switch). The fourth information may include a terminal identifier that may be identified by the core network.

The fourth information may serve as the first information in the method 100 for transmission in the communication system.

S302: The core network device sends a terminal context to the first access network device.

The core network device may determine, based on the fourth information, that the terminal is handed over from the second access network device to the first access network device. In response to the fourth information, the core network device sends the terminal context to the first access network device.

The terminal context may serve as the second information in the method 100 for transmission in the communication system.

Optionally, the method 300 may further include operation S303.

S303: The core network device sends indication information to the second access network device, where the indication information indicates the second access network device to delete the terminal context.

FIG. 11 provides a schematic flowchart of a communication method 400. The communication method 400 is applicable to the communication system shown in FIG. 6 or FIG. 7.

S401: A terminal sends a measurement report to a second access network device.

The terminal performs measurement based on a measurement configuration from the second access network device. The terminal sends the measurement report to the second access network device. The measurement report may include a result of measuring a first access network device by the terminal.

S402: The second access network device sends a handover request to the first access network device via a gateway.

The second access network device may determine, based on the measurement report, to send the handover request to the first access network device. The handover request is used for requesting to hand over the terminal to the first access network device.

The handover request may serve as the second information in the method 100 for transmission in the communication system.

S403: The first access network device sends a handover response to the second access network device via the gateway.

In response to the handover request, the first access network device may determine to accept the terminal. The first access network device sends the handover response to the second access network device.

The handover response may serve as the first information in the method 100 for transmission in the communication system.

S404: The second access network device sends a handover command to the terminal.

In response to the handover response, the second access network device sends the handover command to the terminal. The handover command indicates the terminal to be handed over to the first access network device.

Based on a technical concept similar to that in the foregoing descriptions, an embodiment of this application provides a communication apparatus. The communication apparatus may be a first donor node, a second donor node, or a first node in any one of the possible design solutions in the methods 100 to 400 in the foregoing embodiments. The communication apparatus includes at least one corresponding unit configured to perform a method step, an operation, or behavior performed by the first donor node, the second donor node, or the first node in the communication methods provided in the methods 100 to 400. The at least one unit may be disposed in one-to-one correspondence with the method step, the operation, or the behavior performed by the first donor node, the second donor node, or the first node. These units may be implemented by using a computer program, may be implemented by using a hardware circuit, or may be implemented by using a computer program in combination with a hardware circuit.

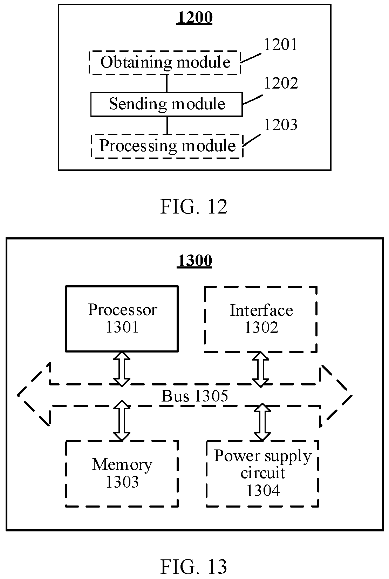

The following describes a communication apparatus provided in this application with reference to FIG. 12. As shown in FIG. 12, a communication apparatus 1200 may be applied to a terminal, a first access network device, a gateway, a second access network device, or a core network device. The following describes in detail a structure and a function of the communication apparatus 1200 in different designs. Although names of modules in different designs are the same, structures and functions may be different.

In a possible design, the communication apparatus 1200 may include an obtaining module 1201 and a sending module 1202, and optionally, includes a processing module 1203. The obtaining module 1201 obtains first information. The sending module 1202 sends the first information to the core network device through a control plane of an NG interface or a GTP-U tunnel between the first access network device and the core network device. The first information transmitted on the control plane of the NG interface or the GTP-U tunnel passes through a route of the second access network device.

In a design, the obtaining module 1201 receives the first information from the terminal through a Uu interface. The first information includes at least one of information used for requesting registration, information used for requesting establishment of a PDU session, and an IP data packet. In another design, the processing module 1203 automatically generates the first information. The first information includes information used for requesting setup of the NG interface.

In a design, the first information transmitted on the control plane of the NG interface or the GTP-U tunnel has a corresponding IP header. The IP header includes a destination IP address and a source IP address. The destination IP address includes an IP address of the core network device, and the source IP address includes an IP address of the first access network device.

In a design, during transmission of the first information on the GTP-U tunnel, the IP address of the first access network device includes an IP address used for a first PDU session of the terminal.

In a design, the obtaining module 1201 receives the IP address of the first access network device and/or the IP address of the core network device from the second access network device, the core network device, or a network management device.

In a design, the sending module 1202 sends request information to the second access network device, the core network device, or the network management device. The request information is used for requesting the IP address of the first access network device and/or the IP address of the core network device.

In a design, the first information transmitted on the control plane of the NG interface or the GTP-U tunnel further passes through a gateway.

In a design, the obtaining module 1201 receives the IP address of the first access network device and/or the IP address of the core network device from the second access network device, the core network device, or the network management device via the gateway.

In a design, the gateway is located in the first access network device.

In another possible design, the communication apparatus 1200 may include the obtaining module 1201, the sending module 1202, and the processing module 1203. The obtaining module 1201 obtains a first message. The first message carries the first information transmitted on the control plane of the NG interface or the GTP-U tunnel between the first access network device and the core network device. The processing module 1203 generates a third message based on the first message. The sending module 1202 sends the third message to the second access network device through a radio interface between the gateway and the second access network device.

In a design, the processing module 1203 adds a corresponding adaptation Adapt layer header to the first message. The Adapt layer header includes identification information of the first access network device.

In a design, the sending module 1202 sends the third message to the second access network device through a default backhaul channel between the gateway and the second access network device.

In another possible design, the communication apparatus 1200 may include the sending module 1202. Optionally, the communication apparatus 1200 includes the obtaining module 1201 and/or the processing module 1203. The sending module 1202 sends second information to the terminal or the first access network device through the control plane of the NG interface or the GTP-U tunnel between the core network device and the first access network device. The second information transmitted on the control plane of the NG interface or the GTP-U tunnel passes through the route of the second access network device.

In a design, the sending module 1202 sends the second information to the terminal. The second information includes at least one of information used for accepting registration, information used for requesting establishment of a protocol data unit PDU session resource, and an internet protocol IP data packet. In another design, the sending module 1202 sends the second information to the first access network device. The second information includes information used for responding to an NG interface setup request.

In a design, the second information transmitted on the control plane of the NG interface or the GTP-U tunnel has a corresponding IP header. The IP header includes a destination IP address and a source IP address. The destination IP address includes an IP address of the core network device, and the source IP address includes an IP address of the first access network device.

In a design, when the second information is transmitted on the GTP-U tunnel, the IP address of the first access network device includes an IP address of a second PDU session of the terminal.

In a design, the second information transmitted on the GTP-U tunnel has a corresponding GTP-U header. The GTP-U header includes a flow identifier QFI corresponding to the second information.

In a design, the second information transmitted on the control plane of the NG interface or the GTP-U tunnel further passes through the gateway.

In a design, the gateway is located in the first access network device.

In another possible design, the communication apparatus 1200 may include the obtaining module 1201, the sending module 1202, and the processing module 1203. The obtaining module 1201 obtains a second message. The second message carries the second information transmitted on the control plane of the NG interface or the GTP-U tunnel between the core network device and the first access network device. The processing module 1203 generates a fourth message based on the second message. The sending module 1202 sends the fourth message to the first access network device.

In a design, the second message has a corresponding internet protocol IP header. The IP header includes a destination IP address and a source IP address. The destination IP address includes the IP address of the core network device, and the source IP address includes the IP address of the first access network device.

In a design, when the second message carries the second information transmitted on the GTP-U tunnel between the core network device and the first access network device, the IP address of the first access network device includes the IP address of the second PDU session of the terminal.

In a design, the processing module 1203 may add a corresponding adaptation Adapt layer header to the second message. The Adapt layer header includes the identification information of the first access network device.

In a design, the sending module 1202 may send the fourth message to the first access network device through the radio interface between the second access network device and the gateway.

In a design, the processing module 1203 may determine the gateway corresponding to the IP address of the first access network device based on a correspondence between the IP address of the first access network device and the gateway, and the IP address of the first access network device.

In a design, the correspondence between the IP address of the first access network device and the gateway is from the core network device. In another design, the correspondence between the IP address of the first access network device and the gateway is automatically generated by the processing module 1203.

As shown in FIG. 13, a communication apparatus 1300 includes at least one processor 1301, and optionally, further includes an interface 1302. When related program instructions are executed in the at least one processor 1301, the apparatus 1300 may implement the communication method provided in any one of the foregoing embodiments and the possible designs thereof. Alternatively, the processor 1301 is configured to implement, by using a logic circuit or by executing code instructions, the communication method provided in any one of the foregoing embodiments and the possible designs thereof. The interface 1302 may be configured to receive program instructions and communicate the program instructions to the processor, or the interface 1302 may be configured to perform communication exchange between the apparatus 1300 and another communication device, for example, exchange control signaling and/or service data. For example, the interface 1302 may be configured to receive a signal from an apparatus other than the apparatus 1300 and communicate the signal to the processor 1301, or send a signal from the processor 1301 to a communication apparatus other than the apparatus 1300. The interface 1302 may be code and/or a data read/write interface circuit, or the interface 1302 may be a signal transmission interface circuit between a communication processor and a transceiver, or may be a pin of a chip. Optionally, the communication apparatus 1300 may further include at least one memory 1303. The memory 1303 may be configured to store the related program instructions and/or data that are/is needed. Optionally, the apparatus 1300 may further include a power supply circuit 1304. The power supply circuit 1304 may be configured to supply power to the processor 1301. The power supply circuit 1304 and the processor 1301 may be located in a same chip, or the power supply circuit 1304 may be located in a chip other than a chip in which the processor 1301 is located. Optionally, the apparatus 1300 may further include a bus 1305, and parts of the apparatus 1300 may be interconnected through the bus 1305.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), serving as an external cache. By way of example but not limitation, many forms of the random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supplying line, a power supplying subsystem, a power management chip, a power consumption management processor, or a power consumption management control circuit.

The transceiver apparatus, the interface, or the transceiver in embodiments of this application may include a separate sender and/or a separate receiver, or a sender and a receiver may be integrated. The transceiver apparatus, the interface, or the transceiver may work under an indication of a corresponding processor. Optionally, the sender may correspond to a transmitter machine in a physical device, and the receiver may correspond to a receiver machine in the physical device.

It may be clearly understood by a person skilled in the art that, for the purpose of convenient and brief description, division of the foregoing functional modules serves as an example for illustration. In actual application, the foregoing functions may be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In embodiments of this application, it should be understood that the disclosed system, apparatus, and method may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

A person of ordinary skill in the art may be aware that, in combination with examples described in embodiments disclosed in this specification, units or algorithm operations may be implemented by hardware, software, or a combination of software and hardware. Whether the functions are performed by the hardware or the software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that the processor reads and executes program instructions stored in the memory to implement a function corresponding to the foregoing module or unit. The processor is a processing circuit that has a function of executing the program instructions, and includes but is not limited to at least one of the following: types of processing circuits that can execute the program instructions, for example, a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface that are used for hardware acceleration). The processor may be presented in a form of an integrated chip. For example, the processor may be presented in a form of an integrated chip whose processing function includes only a function of executing software instructions, or may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, the processing function may further include various hardware acceleration functions (for example, AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (for example, a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that when this application is implemented by using the software, the hardware, or the combination of software and hardware, this application may be implemented by using different software and hardware, and is not limited to only one type of software or hardware. For example, one of the modules or units may be implemented through the CPU, and another module or unit may be implemented through the DSP. Similarly, when the hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that the software usually has better flexibility but poorer performance than the hardware, and the hardware is exactly opposite. Therefore, the person skilled in the art may select the software, the hardware, or the combination thereof for implementation based on an actual requirement.

In the foregoing embodiments, the descriptions of each embodiment have respective focuses. For a part that is not described in detail in a specific embodiment, refer to the related descriptions in other embodiments. Embodiments of this application may be combined, or some technical features in embodiments may be decoupled from specific embodiments and combined with a conventional technology, to resolve a technical problem in embodiments of this application.

In embodiments of this application, the units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or serves as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that may store program code, for example, a USB flash drive, a removable hard disk drive, a read-only memory (read-only memory, ROM), a random access memory (random access memory, RAM), a magnetic disk, or an optical disc.

In the descriptions of this application, the words, for example, "first", "second", "S 101 ", or "S102" are merely used for distinguishing and description and for ease of organizing this article. Different sequences or numbers do not have specific technical meanings, and cannot be understood as indicating or implying relative importance, or cannot be understood as indicating or implying an execution sequence of operations.

The term "and/or" in this application describes only an association relationship for associated obj ects, and indicates that three relationships may exist. For example, "A and/or B" may indicate the following three cases: Only A exists, both A and B exist, and only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In the descriptions of this application, unless otherwise specified, a quantity of nouns indicates "a singular noun or a plural noun", that is, "one or more". "At least one" indicates one or more. "Including at least one of the following: A, B, and C" indicates that may include A, include B, include C, include A and B, include A and C, include B and C, or include A, B, and C. A, B, and C each may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, applied to a first access network device, and comprising:
obtaining first information; and
sending the first information to a core network device through a control plane of a next generation NG interface or a general packet radio service tunnelling protocol for the user plane GTP-U tunnel between the first access network device and the core network device, wherein
the first information transmitted on the control plane of the NG interface or the GTP-U tunnel passes through a route of a second access network device.

2. The method according to claim 1, wherein the obtaining first information comprises:
receiving the first information from a terminal through a Uu interface, wherein the first information comprises at least one of information for requesting registration, information for requesting establishment of a protocol data unit PDU session, and an internet protocol IP data packet; or
generating the first information, wherein the first information comprises information for requesting setup of the NG interface.

3. The method according to claim 1 or 2, wherein
the first information transmitted on the control plane of the NG interface or the GTP-U tunnel has a corresponding IP header, wherein the IP header comprises a destination IP address and a source IP address, the destination IP address comprises an IP address of the core network device, and the source IP address comprises an IP address of the first access network device.

4. The method according to claim 3, wherein during transmission of the first information on the GTP-U tunnel, the IP address of the first access network device comprises an IP address used for a first PDU session of the terminal.

5. The method according to claim 3 or 4, comprising:
receiving the IP address of the first access network device and/or the IP address of the core network device from the second access network device, the core network device, or a network management device.

6. The method according to claim 5, comprising:
sending request information to the second access network device, the core network device, or the network management device, wherein the request information is used for requesting the IP address of the first access network device and/or the IP address of the core network device.

7. The method according to any one of claims 1 to 6, wherein the first information transmitted on the control plane of the NG interface or the GTP-U tunnel further passes through a gateway.

8. The method according to claim 7, wherein the receiving the IP address of the first access network device and/or the IP address of the core network device from the second access network device, the core network device, or a network management device comprises:
receiving the IP address of the first access network device and/or the IP address of the core network device from the second access network device, the core network device, or the network management device via the gateway.

9. The method according to claim 7, wherein the gateway is located in the first access network device.

10. A communication method, applied to a gateway, and comprising:
obtaining a first message, wherein the first message carries first information transmitted on a control plane of a next generation NG interface or a general packet radio service tunnelling protocol for the user plane GTP-U tunnel between a first access network device and a core network device;
generating a third message based on the first message; and
sending the third message to a second access network device through a radio interface between the gateway and the second access network device.

11. The method according to claim 10, wherein the generating a third message based on the first message comprises:
adding a corresponding adaptation Adapt layer header to the first message, wherein the Adapt layer header comprises identification information of the first access network device.

12. The method according to claim 10 or 11, wherein the sending the third message to a second access network device through a radio interface between the gateway and the second access network device comprises:
sending the third message to the second access network device through a default backhaul channel between the gateway and the second access network device.

13. A communication method, applied to a core network device, and comprising:
sending second information to a terminal or a first access network device through a control plane of a next generation NG interface or a general packet radio service tunnelling protocol for the user plane GTP-U tunnel between the core network device and the first access network device, wherein
the second information transmitted on the control plane of the NG interface or the GTP-U tunnel passes through a route of a second access network device.

14. The method according to claim 13, wherein the sending second information to a terminal or a first access network device comprises:
sending the second information to the terminal, wherein the second information comprises at least one of information used for accepting registration, information used for requesting establishment of a protocol data unit PDU session resource, and an internet protocol IP data packet; or
sending the second information to the first access network device, wherein the second information comprises information used for responding to an NG interface setup request.

15. The method according to claim 13 or 14, wherein the second information transmitted on the control plane of the NG interface or the GTP-U tunnel has a corresponding IP header, the IP header comprises a destination IP address and a source IP address, the destination IP address comprises an IP address of the core network device, and the source IP address comprises an IP address of the first access network device.

16. The method according to claim 15, wherein when the second information is transmitted on the GTP-U tunnel, the IP address of the first access network device comprises an IP address of a second PDU session of the terminal.

17. The method according to any one of claims 13 to 16, wherein the second information transmitted on the GTP-U tunnel has a corresponding GTP-U header, and the GTP-U header comprises a flow identifier QFI corresponding to the second information.

18. The method according to any one of claims 13 to 17, wherein the second information transmitted on the control plane of the NG interface or the GTP-U tunnel further passes through a gateway.

19. The method according to claim 18, wherein the gateway is located in the first access network device.

20. A communication method, applied to a second access network device, and comprising:
obtaining a second message, wherein the second message carries second information transmitted on a control plane of a next generation NG interface or a general packet radio service tunnelling protocol for the user plane GTP-U tunnel between a core network device and a first access network device;
generating a fourth message based on the second message; and
sending the fourth message to the first access network device.

21. The method according to claim 20, wherein the second message has a corresponding internet protocol IP header, the IP header comprises a destination IP address and a source IP address, the destination IP address comprises an IP address of the core network device, and the source IP address comprises an IP address of the first access network device.

22. The method according to claim 21, wherein
when the second message carries the second information transmitted on the GTP-U tunnel between the core network device and the first access network device, the IP address of the first access network device comprises an IP address of a second PDU session of a terminal.

23. The method according to any one of claims 20 to 22, wherein the generating a fourth message based on the second message comprises:
adding a corresponding adaptation Adapt layer header to the second message, wherein the Adapt layer header comprises identification information of the first access network device.

24. The method according to any one of claims 20 to 23, wherein the sending the fourth message to the first access network device comprises:
sending the fourth message to the first access network device through a radio interface between the second access network device and a gateway.

25. The method according to claim 24, comprising:
determining the gateway corresponding to the IP address of the first access network device based on a correspondence between the IP address of the first access network device and the gateway, and the IP address of the first access network device.

26. The method according to claim 25, wherein the correspondence between the IP address of the first access network device and the gateway is from the core network device; or
the correspondence between the IP address of the first access network device and the gateway is automatically generated by the second access network device.

27. A communication apparatus, comprising at least one processor and an interface, wherein the interface is configured to receive and/or send a signal, and the processor is configured to enable the method according to any one of claims 1 to 26 to be performed.

28. A communication apparatus, wherein the apparatus is configured to perform the method according to any one of claims 1 to 26.

29. A computer-readable storage medium, wherein the computer-readable storage medium stores computer program instructions; and when the computer program instructions are executed by a processor, the method according to any one of claims 1 to 26 is enabled to be implemented.

30. A computer program product, wherein the computer program product comprises program instructions, and when the program instructions are executed by a processor, the method according to any one of claims 1 to 26 is enabled to be implemented.
